# EUROPEAN PATENT APPLICATION

(11) **EP 4 848 366 A1**
(43) Date of publication of application: **02.12.2026**
(21) Application number: 25833541.3
(22) Date of filing: 04.07.2025
(51) Int. Cl.: H01M 4/38, H01M 4/62, H01M 4/04, H01M 4/02

(54) **POWDER, ANODE COMPRISING SAME, AND ELECTROCHEMICAL DEVICE COMPRISING SAME**

(30) Priority: 04.07.2024 KR 20240088546
(71) Applicant: LG Energy Solution, Ltd., Seoul 07335 (KR)
(72) Inventor: YANG, Su-Hyun, Daejeon 34122 (KR); KANG, Hyeon-Jeong, Daejeon 34122 (KR); KIM, Hak-Yoon, Daejeon 34122 (KR); PARK, Moon-Soo, Daejeon 34122 (KR)
(74) Representative: Goddar, Heinz J.
(86) International application number: PCT/KR2025/009673
(87) International publication number: WO 2026/010457

(57) **Abstract**

Provided are granules including a silicon-based active material, a linear conductive material and a binder for the granules, and more particularly, granules including a silicon-based active material, a linear conductive material and a binder for the granules wherein the binder for the granules connect and hold the silicon-based active material and the linear conductive material together, and a negative electrode and an electrochemical device including the same.

## Description

### TECHNICAL FIELD

The present disclosure relates to granules, a negative electrode including the same and an electrochemical device including the same.

This application is based on and claims priority from Korean Patent Application No. 10-2024-0088546 filed on July 4, 2024, with the Korean Intellectual Property Office, the disclosures of which are incorporated herein in its entirety by reference.

### BACKGROUND ART

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of applications of secondary batteries is gradually expanding. One of typical secondary batteries, lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of applications of lithium secondary batteries is expanding to an auxiliary power source through a grid.

A lithium secondary battery has a structure in which an electrode assembly is filled with an electrolyte including a lithium salt, the electrode assembly including a positive electrode and a negative electrode, each electrode including an active material coated on an electrode current collector, and a porous separator interposed between the positive electrode and the negative electrode, and the electrode is manufactured by applying a slurry to the current collector, followed by drying and pressing/rolling, the slurry including an active material, a binder for granules and a conductive material dispersed in a solvent.

Furthermore, fundamental performance characteristics of lithium secondary batteries such as capacity, output and life are significantly affected by the negative electrode material. To maximize battery performance, the negative electrode active material is required to meet the requirements: electrochemical reaction potential close to lithium metal, high reaction reversibility with lithium ions and rapid lithium ion diffusion within the active material.

Carbon-based materials have been mainly used as negative electrode materials of lithium secondary batteries, but their theoretical capacity limit of 372 mAh/g is an obstacle to increase energy density. To solve this problem, silicon-based materials are considered as a promising alternative. The theoretical capacity of silicon is 4010 mAh/g which is at least 10 times higher than carbon-based materials. However, the charge/discharge efficiency of carbon-based materials is 92%, while charge/discharge efficiency of silicon-based materials is as low as 80%. Furthermore, a change in volume during charging and discharging is as high as 300%, resulting in broken conductive pathways during continuous charging and discharging, thereby failing to work as active materials.

When the negative electrode includes a mixture of silicon-based material and carbon-based material (for example, graphite-based material), attempts have been made to use high modulus binders for granules or increase the amount of binders for granules in order to prevent swelling caused by the expansion of the silicon-based material during charging. In addition, because the silicon-based material has lower conductivity than the graphite-based material, a conductive material, for example, carbon nanotubes (CNT) was added to increase conductivity. However, in practical situations where there are limits to the amounts of the binder for granules and the conductive material, taking capacity and material cost into account, the high modulus binder for granules and the conductive material, for example, CNT distributed evenly across the silicon-based material and the graphite-based material within the electrode suppress the expansion of the silicon-based material and improve conductivity in an inadequate manner.

### DISCLOSURE

### Technical Problem

The present disclosure is directed to providing granules with minimized volume expansion and improved conductivity, a negative electrode including the granules and an electrochemical device including the negative electrode.

### Technical Solution

To solve the above-described problem, according to an aspect of the present disclosure, there are provided granules of the following embodiments.

According to a first embodiment of the present disclosure,
there are provided granules including a silicon-based active material, a linear conductive material and a binder for the granules,
wherein the binder for the granules connect and hold the silicon-based active material and the linear conductive material together, and
wherein multiplication of circularity and solidity of the granule is 0.7 to 0.9, and the circularity and the solidity are defined by Equation 1 and Equation 2 below, respectively,

   $Circularity = 4 π \left(pi\right) * \left(actual area of granule\right) / {\left(perimeter of granule\right)}^{2}$ Equation 1

   $Solidity = \left(actual area of granule\right) / convex hull area of granule$ Equation 2
wherein the convex hull area of the granule is a total area enclosed by a convex hull of the granule, and refers to an area of a simplest convex polygon created by connecting outermost points of the granule.

According to a second embodiment of the present disclosure, in the first embodiment,
the multiplication of the circularity and the solidity of the granule may be 0.7 to 0.88.

According to a third embodiment of the present disclosure, in the first or second embodiment,
an average particle size (D50) of the granules may be 10 µm to 25 µm.

According to a fourth embodiment of the present disclosure, in any one of the first to third embodiments,
an angle of repose of the granules may be 35° to 80°.

According to a fifth embodiment of the present disclosure, in any one of the first to fourth embodiments,
the silicon-based active material may include silicon (Si), silicon oxide (SiOx (0<x≤2), a Si/C composite, or two or more thereof.

According to a sixth embodiment of the present disclosure, in any one of the first to fifth embodiments,
the linear conductive material may include single-walled carbon nanotubes (SWCNT), multi-walled carbon nanotubes (MWCNT), carbon nanofibers, or two or more thereof.

According to a seventh embodiment of the present disclosure, in any one of the first to sixth embodiments,
the binder may include at least one of a linear binder or a dot-type binder.

According to an eighth embodiment of the present disclosure, in the seventh embodiment,
the binder may include the linear binder and the dot-type binder.

According to a ninth embodiment of the present disclosure, in the seventh or eighth embodiment,
the linear binder may include an acrylate-based polymer, and the dot-type binder may include a diene-based polymer, a styrene-based polymer, or two or more thereof.

According to a tenth embodiment of the present disclosure, in any one of the first to ninth embodiments,
the granules may include a central portion including the silicon-based active material and the linear conductive material; and a surface portion present on all or part of an outer side of the central portion, the surface portion including the binder for the granules holding the silicon-based active material and the linear conductive material together.

According to an eleventh embodiment of the present disclosure, in the tenth embodiment,
an amount (wt%) of the binder for the granules to a total weight 100 wt% of the silicon-based active material, the linear conductive material and the binder for the granules may be larger at the surface portion of the granules than the central portion, and
the surface portion may be an area near a granule surface to a predetermined depth in a direction from the granule surface to a granule center, and the central portion may be an area other than the surface portion.

According to a twelfth embodiment of the present disclosure, in any one of the first to eleventh embodiments,
the granules may include 80 to 98 parts by weight of the silicon-based active material, 0.2 to 10 parts by weight of the linear conductive material, and 0.5 to 10 parts by weight of the binder for the granules based on 100 parts by weight of the granules.

According to a thirteenth embodiment of the present disclosure, in any one of the first to twelfth embodiments,
the granules may further include a carbon-based active material.

According to a fourteenth embodiment of the present disclosure, in any one of the first to thirteenth embodiments,
the granules may further include a dispersant.

According to a fifteenth embodiment of the present disclosure, in the fourteenth embodiment,
the dispersant may include carboxymethyl cellulose (CMC).

According to a sixteenth embodiment of the present disclosure,
there is provided a method for manufacturing the granules defined in any one of the first to fifteenth embodiments, the method including drying a composition including the silicon-based active material, the linear conductive material, the binder for the granules and an aqueous dispersion medium by spray drying.

According to a seventeenth embodiment of the present disclosure,
there is provided a negative electrode for an electrochemical device, including:
a current collector; and
a negative electrode active material layer present on the current collector,
wherein the negative electrode active material layer includes granules including a silicon-based active material, a linear conductive material and a binder for the granules,
wherein the granules include the silicon-based active material, the linear conductive material and the binder for the granules,
wherein the binder for the granules connect and hold the silicon-based active material and the linear conductive material together, and
wherein multiplication of circularity and solidity of the granule is 0.7 to 0.9, and the circularity and the solidity are defined by Equation 1 and Equation 2 below, respectively,
   $Circularity = 4 π \left(pi\right) * \left(actual area of granule\right) / {\left(perimeter of granule\right)}^{2}$ Equation 1
   $Solidity = \left(actual area of granule\right) / convex hull area of granule$ Equation 2
wherein the convex hull area of the granule is a total area enclosed by a convex hull of the granule, and refers to an area of a simplest convex polygon created by connecting outermost points of the granule.

In addition, according to an embodiment of the present disclosure,
there is provided a negative electrode for an electrochemical device, including: a current collector; and
a negative electrode active material layer present on the current collector,
wherein the negative electrode active material layer includes the granules of any one of the first to fifteenth embodiments including the silicon-based active material, the linear conductive material and the binder for the granules.

According to an eighteenth embodiment of the present disclosure, in the seventeenth embodiment,
a degree of dispersion of the granules within the negative electrode active material layer may be 1 x 10⁻² to 10 x 10⁻², and a standard deviation of dispersion of the granules may be 1 x 10⁻³ to 4 x 10⁻³.

According to a nineteenth embodiment of the present disclosure, in the seventeenth or eighteenth embodiment,
a volume expansion ratio of the negative electrode active material layer may be 3% to 35%.

According to a twentieth embodiment of the present disclosure, in any one of the seventeenth to nineteenth embodiments,
the negative electrode active material layer may include the granules, a carbon-based active material and a binder for the negative electrode layer.

According to a twenty first embodiment of the present disclosure, in the twentieth embodiment,
the negative electrode active material layer may include 1 to 10 parts by weight of the granules, 70 to 99 parts by weight of the carbon-based active material and 0.1 to 10 parts by weight of the binder for the negative electrode layer based on 100 parts by weight of the negative electrode active material layer.

According to a twenty second embodiment of the present disclosure, in any one of the seventeenth to twenty first embodiments,
the negative electrode active material layer may include the granules, a carbon-based active material, a binder for the negative electrode layer and a conductive material for the negative electrode layer.

According to a twenty third embodiment of the present disclosure, in the twenty second embodiment,
the negative electrode active material layer may include 1 to 10 parts by weight of the granules, 70 to 99 parts by weight of the carbon-based active material, 0.01 to 5 parts by weight of the conductive material for the negative electrode layer, and 0.1 to 10 parts by weight of the binder for the negative electrode layer based on 100 parts by weight of the negative electrode active material layer.

According to a twenty fourth embodiment of the present disclosure,
there is provided a method for manufacturing the negative electrode for the electrochemical device defined in any one of the seventeenth to twenty third embodiments, the method including forming the negative electrode active material layer using the granules including the silicon-based active material, the linear conductive material and the binder for the granules.

According to a twenty fifth embodiment of the present disclosure, in the twenty fourth embodiment,
the method for manufacturing the negative electrode may include a wet process, a dry process, or both.

According to a twenty sixth embodiment of the present disclosure, in the twenty fifth embodiment,
the wet process may include mixing the granules and a binder for the negative electrode layer together, or mixing the granules, the binder for the negative electrode layer and a conductive material for the negative electrode layer together in a dispersion medium to prepare a negative electrode slurry; and applying the negative electrode slurry to at least one surface of a current collector and drying to form the negative electrode active material layer.

According to a twenty seventh embodiment of the present disclosure, in the twenty fifth or twenty sixth embodiment,
the dry process may include dry mixing the granules and a fibrillatable binder, or dry mixing the granules, the fibrillatable binder and a conductive material for the negative electrode layer to prepare a mixture;
kneading the prepared mixture to produce a mixture mass, and grinding the mixture mass to obtain electrode mixture granules;
feeding the electrode mixture granules between a plurality of rolls to perform calendaring to form an electrode film; and
laminating the electrode film on a metal current collector.

According to a twenty eighth embodiment of the present disclosure, in any one of the twenty fifth to twenty seventh embodiments,
the dry process may include directly applying, to a current collector, the granules alone, the granules and a binder for the negative electrode layer together, or the granules, the binder for the negative electrode layer and a conductive material for the negative electrode layer together and pressing/rolling.

According to a twenty ninth embodiment of the present disclosure, in any one of the twenty fourth to twenty eighth embodiments,
the negative electrode active material layer may further include a carbon-based active material.

According to a thirtieth embodiment of the present disclosure,
there is provided an electrochemical device including the negative electrode for the electrochemical device defined in any one of the seventeenth to twenty third embodiments.

According to a thirty first embodiment of the present disclosure, in the thirtieth embodiment,
the electrochemical device may be a secondary battery.

### Advantageous Effects

According to an embodiment of the present disclosure, the use of the granules having the predetermined nonspherical shape including the linear conductive material and the binder for granules in larger amounts on the surface of the silicon-based active material or near the silicon-based active material may provide the negative electrode for secondary batteries with suppressed swelling characteristics and improved life characteristics by preventing degradation caused by shrinkage and expansion of the silicon-based active material, compared to conventional negative electrodes including silicon-based active materials.

Furthermore, the negative electrode according to an embodiment of the present disclosure has an even distribution of the granules within the negative electrode active material layer without agglomeration of the granules at some areas such that the degree of dispersion of the granules falls within the predetermined range and its low standard deviation, thereby preventing degradation caused by shrinkage and expansion of the silicon-based active material, as well as improving conductivity in the negative electrode active material layer and remarkably enhancing electrochemical performance of the secondary battery such as life characteristics.

The negative electrode according to an embodiment of the present disclosure may be applied to both wet electrodes and dry electrodes, thereby significantly improving performance of secondary batteries including these electrodes.

### BRIEF DESCRIPTION OF THE DRAWINGS

The accompanying drawings illustrate the exemplary embodiments of the present disclosure and together with the above description, serve to provide a better understanding of the technical aspects of the present disclosure, and thus the present disclosure should not be construed as being limited to the drawings.
FIGS. 1 to 3 are scanning electron microscopic (SEM) images of granules included in a negative electrode according to Example 1.
FIG. 4 is an SEM image of granules included in a negative electrode according to Example 2.
FIGS. 5a to 5c are SEM images of granules included in negative electrodes according to Comparative Examples 1-1, 2-1 and 3-1, respectively.
FIG. 6 is an image of an apparatus for manufacturing granules according to an embodiment of the present disclosure.
FIG. 7 is a schematic diagram of granule (C) according to an embodiment of the present disclosure, spherical granule (A), and crushed granule (B) obtained by a higher shear force when manufacturing an electrode using the spherical granule.
FIG. 8 is an image showing dispersion evaluation of granules within negative electrode active material layers of electrodes of Example 2, Comparative Example 1-1, Comparative Example 2-2 and Comparative Example 4.

### BEST MODE

Hereinafter, the present disclosure will be described in further detail to help the understanding of the present disclosure.

It should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define terms appropriately for the best explanation.

The terms as used herein are used to describe the exemplary embodiments of the present disclosure but not intended to be limiting. The singular forms include the plural forms unless the context clearly indicates otherwise.

It should be further understood that "include", "comprise" or "have" when used in the specification, specifies the presence of the stated elements and does not preclude the presence or addition of one or more other elements unless expressly stated otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, 'A and/or B' refers to either A or B or both.

In this specification, "glass transition temperature (Tg)" may be measured by a commonly used method well-known in the art, and may be, for example, measured by differential scanning calorimetry (DSC).

The term "porosity" as used herein refers to the ratio of pore volume in a structure to its total volume and is indicated in vol%, and may be used interchangeably with void fraction, degree of porosity or the like. In the present disclosure, the measurement of the porosity is not limited to a particular method, and according to an embodiment of the present disclosure, for example, the porosity may be measured by the Brunauer-Emmett-Teller (BET) method using nitrogen gas, Hg porosimeter or ASTM D-2873. Alternatively, the porosity of a separator may be calculated from a difference between the apparent density and the net density, wherein the net density of the separator is calculated from the density (apparent density) of the separator, a composition ratio of materials included in the separator and the density of each component.

The "thickness" of each layer included in an electrode as used herein may indicate a value measured by a method commonly used to measure the thickness. The thickness may be, for example, a value measured using a thickness measurement device (Mitutoyo, VL-50S-B) or a value measured on an image obtained by observing a horizontal cross section using an X-ray microscope (XRM) (for example, ZEISS Xradia Versa 620) although the method for measuring the thickness is not limited thereto.

The "specific surface area" as used herein may refer to a value measured by a method commonly used to measure the specific surface area. The specific surface area may be, for example, a value measured by a flowable or fixed method although the method for measuring the specific surface area is not limited thereto.

According to an aspect of the present disclosure,
there are provided granules including a silicon-based active material, a linear conductive material and a binder for granules,
wherein the binder for granules connects and holds the silicon-based active material and the linear conductive material together, and
wherein multiplication of circularity and solidity of the granule is 0.7 to 0.9, and circularity and solidity are defined by Equations 1 and 2 below:

   $Circularity = 4 π \left(pi\right) * \left(actual area of granule\right) / {\left(perimeter of granule\right)}^{2}$ Equation 1

   $Solidity = \left(actual area of granule\right) / convex hull area of granule$ Equation 2

In the present disclosure, the granule may be referred to as a powder, a grain or a coarse particle.

In the present disclosure, the granule may have a shape of a composite particle including the silicon-based active material, the linear conductive material and the binder for granules, and further including an optional substance (an additional conductive material), if necessary.

In an embodiment of the present disclosure, the silicon-based active material may include one or more silicon-based active material particles.

The granule may be a secondary particle in which one or more silicon-based active material particles are connected and held together by the binder for granules.

The negative electrode active material including the silicon-based active material having high capacity but a large volume change which places a limitation on the range of applications is prepared as the granules of a predetermined shape according to an embodiment of the present disclosure, and the silicon-based active material is connected and held by the linear conductive material and the binder for granules distributed evenly within the granules. Even though there is a change in volume of the silicon-based active material within the negative electrode active material layer afterwards, conductive networks within the negative electrode active material layer may be stably formed by the linear conductive material connected in line contact by an even distribution of the silicon-based active material, and as a result, electrical properties such as life characteristics in electrochemical devices or secondary batteries including the negative electrode may be significantly improved.

The multiplication of circularity and solidity of the granule is 0.7 to 0.9.

According to an embodiment of the present disclosure, the multiplication of circularity and solidity of the granule may be 0.7 to 0.88, or 0.7 to 0.87, or 0.7 to 0.86. In this case, the circularity and solidity may be defined by Equations 1 and 2 below, respectively.$Circularity = 4 π \left(pi\right) * \left(actual area of granule\right) / {\left(perimeter of granule\right)}^{2}$ Equation 1 $Solidity = \left(actual area of granule\right) / convex hull area of granule$ Equation 2

Here, the convex hull area of the granules is the total area enclosed by the convex hull of the granules, and refers to the area of the simplest convex polygon created by connecting the outermost points of the granule.

The circularity of the granule may be 0.96 or less, or 0.60 to 0.96, or 0.70 to 0.90.

The circularity of the granule may be defined by equation below. 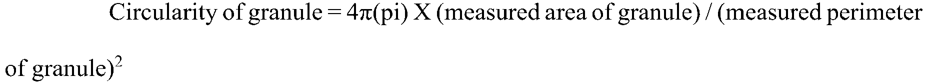 Circularity of granule = 4π(pi) X (measured area of granule) / (measured perimeter of granule)2

The circularity of the granule has a numerical value between 0 and 1, and it signifies that as the circularity is closer to 1, the granule has a perfectly spherical shape.

The circularity of the granule may be measured by a standard test method.

For example, 10,000 particles may be optically imaged using a particle size analyzer (for example, Malvern Morphology 4), and the circularity of the obtained objects may be calculated by numerical averaging.

The solidity is a measure of how uneven the shape of the granules is, or how densely packed the granules are. Because the solidity is calculated by the above Equation 2, i.e., "solidity = (actual area of granule) / convex hull area of granule", it signifies that when the solidity is 1, the granule has a perfectly convex shape without grooves or defects on the surface, and as the solidity is smaller than 1, the granule has an uneven surface or a structure having a hollow center.

The solidity may be determined by optically imaging 10,000 granules using a particle size analyzer (for example, Malvern Morphology 4), finding the actual area (a) of each of the granules and the convex outer area (b) of the granule in the obtained image, and calculating its ratio (a/b).

When the multiplication of circularity and solidity of the granule according to an embodiment of the present disclosure falls within the aforementioned range, the granules are not perfectly spherical in shape but have some uneven parts on the outer surface, resulting in a larger specific surface area, yielding an advantageous result in terms of electrochemical performance.

In an embodiment of the present disclosure, the average particle size D50 of the granules may be 10 µm to 25 µm, or 14 µm to 20 µm.

Additionally, the particle size D10 of the granules may be 5 µm to 10 µm, and the particle size D90 of the granules may be 25 µm to 35 µm.

The "average particle size D50" as used herein refers to a particle size at 50% of cumulative particle size distribution, and the particle size may be measured using a laser diffraction method. Specifically, after a powder to be measured is dispersed in a dispersion medium, the particle size distribution may be calculated using a commercially available particle size analyzer (for example, Malvern Morphology 4). The particle size D50 may be measured by calculating a particle diameter at 50% of cumulative particle size distribution in the measurement instrument. Likewise, the particle size D10 and the particle size D90 may be measured by calculating particle diameters at 10% and 90% of cumulative particle size distribution in the measurement instrument, respectively.

According to an embodiment of the invention, the angle of repose of the granules may be 35° to 80°, or 40° to 70°. When the angle of repose of the granules falls within the aforementioned range, the granules may have good flowability, so the process of transporting the granules or mixing and supplying a slurry may continue with stability, resulting in high productivity, and miscibility in the slurry may be improved, thereby preventing agglomeration and settling of the granules in the slurry, and obtaining the electrode with an even thickness and improved surface quality.

The angle of repose of the granules may be measured by USP 1274 or ASTM D 6393-99 method.

The silicon-based active material may include silicon (Si), silicon oxide (SiOx (0<x≤2)), a Si/C composite, or two or more thereof. Specific examples of the silicon-based active material may include, but are not limited to, Si, SiO, SiO/C or SiO₂.

The Si/C composite (silicon-carbon composite) may include a structure in which silicon-based particles (for example, silicon (Si), silicon oxide (SiOx (0<x≤2))) are physically dispersed or chemically bonded within a carbon-based support (a carbon matrix). The carbon support may include amorphous carbon (carbon black, activated carbon, hard carbon), graphite, carbon nanotubes, carbon nanofibers, graphene, or two or more thereof. In addition, the carbon support may be made of amorphous carbon, graphite, carbon nanotubes, carbon nanofibers, graphene, or two or more thereof.

According to an embodiment of the present disclosure, the amount of the silicon-based particles may be 5 to 45 parts by weight, or 10 to 40 parts by weight, or 15 to 35 parts by weight, or 20 to 30 parts by weight, or 5 to 20 parts by weight, or 20 to 45 parts by weight based on 100 parts by weight of the carbon support. According to an embodiment of the present disclosure, the carbon support may include activated carbon, and the silicon-based particles may include pure Si particles. The granules may further include another type of negative electrode active material other than the silicon-based active material.

When the amount of the silicon-based particles relative to the carbon support falls within the aforementioned range, lithium storage capacity may be increased while maintaining sufficient electrical conductivity, and the carbon support may effectively mitigate the volume expansion of silicon, thereby suppressing cracking and peeling of the electrode structure, resulting in improved mechanical stability of electrodes and charge/discharge characteristics (life characteristics) of secondary batteries.

The other type of negative electrode active material may include, for example, carbon-based active materials such as non-graphitizing carbon or graphite-based carbon (natural graphite, artificial graphite); metal composite oxide such as LiₓFe₂O₃ (0≤x≤1), LiₓWO₂ (0≤x≤1), SnₓMe₁₋ₓ Me'_{y}O_{z} (Me: Mn, Fe, Pb, Ge; Me': Al, B, P, Si, Group 1, 2 and 3 elements in the periodic table, halogen; 0≤x≤1; 1≤y≤3; 1≤z≤8); lithium metals; lithium alloys; silicon-based alloys; tin-based alloys; metal oxide such as SnO, SnO_{2,} PbO, PbO_{2,} Pb₂O_{3,} Pb₃O_{4,} Sb₂O_{3,} Sb₂O_{4,} Sb₂O_{5,} GeO, GeO_{2,} Bi₂O_{3,} Bi₂O₄ and Bi₂O₅; conductive polymer such as polyacetylene; Li-Co-Ni based materials. According to an embodiment of the present disclosure, the granules may further include at least one type of carbon-based active material, for example, natural graphite or artificial graphite.

The linear conductive material may include single-walled carbon nanotubes (SWCNT), multi-walled carbon nanotubes (MWCNT), carbon nanofibers, or two or more thereof.

The carbon nanotubes include an allotrope of carbon including a graphite sheet having a cylindrical shape of a nano-sized diameter and featuring sp2 bonding structure and its array. The carbon nanotube array refers to a secondary structure formed by arrangement or agglomeration of carbon nanotubes. For example, the carbon nanotube array may include bundle-type carbon nanotubes of a bundle or rope shape in which a plurality of carbon nanotubes are arranged or aligned side by side in a specific direction, or entangled-type carbon nanotubes of a spherical or potato shape in which a plurality of carbon nanotubes are entangled in no specific direction.

In this instance, the multi-walled carbon nanotubes are hollow small tubes constructed from a coaxial cylindrical surface sleeve of multiple hexagonal lattices of carbon atoms, and the single-walled carbon nanotubes are composed of only one carbon cylindrical surface. The wall of this tubular structure is composed of hexagonal lattices similar to graphite sheets, and the intersection of the hexagonal lattices is where the carbon atoms are located and each carbon atom is adjacent to the neighboring carbon atoms, and at the same time, both ends (end caps) of the tube are closed by a polygonal structure composed of pentagonal carbon rings.

The linear conductive material, particularly the single-walled carbon nanotubes (SWCNT) or the multi-walled carbon nanotubes (MWCNT) may have a BET specific surface area of 500 m²/g or more, or from 500 m²/g to 5,000 m²/g, or 800 m²/g or more or from 800 m²/g to 5,000 m²/g, or from 900 m²/g to 2,000 m²/g. When the linear conductive material having the aforementioned BET specific surface area is used, this may have a beneficial effect on forming conductive networks between the silicon-based negative electrode active materials, thereby further improving cycling characteristics of secondary batteries.

The linear conductive material may have a length of 0.5 µm to 100 µm. For example, the single-walled carbon nanotubes may have an average length of 2 µm to 100 µm, and the multi-walled carbon nanotubes may have an average length of 0.3 µm to 30 µm. The linear conductive material may have a cross-section diameter of 1 nm to 100 nm.

According to an embodiment of the present disclosure, the linear conductive material may be included in an amount of 0.2 to 10 parts by weight, or 0.2 to 5 parts by weight, or 0.3 to 5 parts by weight, or 0.2 to 3 parts by weight, or 0.2 to 2 parts by weight, or 0.2 to 1.6 parts by weight, or 0.3 to 1.6 parts by weight, based on 100 parts by weight of the granules. When the amount of the linear conductive material falls within the aforementioned range, the linear conductive material may effectively form conductive networks between the silicon-based negative electrode active materials in the granules, and further improve cycling characteristics of the secondary battery including the granules.

When the linear conductive material in a solid form is directly added to produce the granules, the linear conductive material may form agglomerates and may not be evenly mixed with the silicon-based active material and the binder, thereby failing to obtain an expected effect of the addition of the linear conductive material. Accordingly, the granules may be produced by adding the linear conductive material in a form of a linear conductive material dispersion further including a dispersant and a dispersion medium.

According to an embodiment of the present disclosure, the linear conductive material dispersion may include the linear conductive material, a polymer dispersant containing amine and the dispersion medium.

Alternatively, according to an embodiment of the present disclosure, the linear conductive material dispersion may include the linear conductive material, the polymer dispersant containing amine, a phenol-based compound containing two or more aromatic rings and the dispersion medium.

When the linear conductive material is added in the dispersion form as described above, despite the large specific surface area, because the linear conductive material such as carbon nanotubes is dispersed well, the initial viscosity of the dispersion is low, and time-dependent changes in viscosity are suppressed. In addition, when it is used to prepare the slurry for producing the granules, the linear conductive material may be evenly distributed between the active materials, and small spaces between the electrode active materials may be constantly maintained during drying of the slurry in the production of the granules. Furthermore, as the linear conductive material may be evenly distributed without forming agglomerates, sufficient conduction pathways may be formed by the linear conductive material even in a small amount. The average diameter of the linear conductive material may be measured by scanning electron microscope (SEM) imaging of linear conductive material powder, and the average length of the linear conductive material may be measured by SEM of the linear conductive material dispersion. In addition, the linear conductive material included in the negative electrode active material layer may be measured using SEM. That is, when the electrode active material layer including the linear conductive material is dissolved and dispersed in the solvent such as the dispersion medium (for example, water) and separated into a top layer and a bottom layer through centrifugation, the active material mainly settles in the bottom layer and the linear conductive material exists in the top layer, and the average diameter and the average length of the linear conductive material in the negative electrode active material layer may be measured by SEM observation using the supernatant.

The linear conductive material may be included in an amount of 0.01 wt% to 5 wt%, preferably 0.01 wt% to 3 wt%, more preferably 0.1 wt% to 2 wt%, and even more preferably 0.1 wt% to 1 wt%, based on the total weight of the linear conductive material dispersion. When the amount of the linear conductive material falls within the aforementioned range, this may have a beneficial effect on improving the viscosity of the dispersion and enhancing cycling characteristics of secondary batteries.

The dispersant is used to prevent agglomeration of the linear conductive material and achieve even distribution in the linear conductive material dispersion, and the linear conductive material dispersion may include the polymer dispersant containing amine and the phenol-based compound containing two or more aromatic rings together as the dispersant. When the two specific types of dispersants are used together, time-dependent changes in viscosity of the linear conductive material dispersion may be significantly reduced.

In an embodiment of the present disclosure, the dispersant may be included in an amount of 10 to 2000 parts by weight, preferably 50 to 1000 parts by weight, and more preferably 70 to 500 parts by weight, based on 100 parts by weight of the linear conductive material. When the amount of the dispersant falls within the aforementioned range, the viscosity of the linear conductive material dispersion may be properly maintained, and degradation of the properties of secondary batteries caused by the dispersant acting as impurities may be prevented.

The polymer dispersant containing amine may include, for example, at least one selected from the group consisting of polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride and polyethylenimine.

When the specific polymer dispersant containing amine in the polymer structure is used, this may have a more beneficial effect on improving viscosity and suppressing time-dependent changes in viscosity.

The phenol-based compound containing two or more aromatic rings may reduce the viscosity of the linear conductive material dispersion, in particular, an aqueous linear conductive material dispersion, and significantly suppress the increase in viscosity over time, by the influence of the bulky structure generated by the two or more aromatic rings and the hydroxyl group contained in the phenol group.

The phenol-based compound may include at least one structure selected from the group consisting of a phenol structure, a catechol structure, a gallol structure and a naphthol structure in at least one of the aromatic rings, and specifically, may include at least one structure selected from the group consisting of a catechol structure and a gallol structure in at least one of the aromatic rings. The phenol structure is a structure in which one hydroxyl group is bonded to a benzene ring, the catechol structure is a structure in which two hydroxyl groups are bonded to a benzene ring, the gallol structure is a structure in which three hydroxyl groups are bonded to a benzene ring, and the naphthol structure is a structure in which one hydroxyl group is bonded to naphthalene.

When the phenol-based compound containing two or more aromatic rings includes the above-described structure, it may be possible to achieve proper balance between interactions between the aromatic ring and the linear conductive material in the linear conductive material dispersion and interactions by hydrogen bonds between -OH of the phenol-based compound and the polymer dispersant, thereby reducing the viscosity of the linear conductive material dispersion and suppressing the increase in viscosity over time.

Specific examples of the phenol-based compound containing two or more aromatic rings may include at least one selected from the group consisting of baicalin, luteolin, taxifolin, myricetin, quercetin, rutin, catechin, epigallocatechin gallate, butein, piceatenol and tannic acid, and preferably, tannic acid, quercetin, epigallocatechin gallate or a combination thereof.

In an embodiment of the present disclosure, the aromatic ring included in the phenol-based compound containing two or more aromatic rings may be a single unfused aromatic ring or a structure in which two aromatic rings are fused together, and may not include a structure in which three or more aromatic rings are fused together.

That is, the scope of the phenol-based compound containing two or more aromatic rings may preclude the inclusion of the structure in which three or more aromatic rings are fused within the molecular structure.

When the phenol-based compound containing two or more aromatic rings includes the structure in which three or more aromatic rings are fused within the molecular structure, the structure in which three or more aromatic rings are fused together may form strong bond strength with the linear conductive material at or above an optimal level in the linear conductive material dispersion, inducing cohesion between the linear conductive materials, and thus, this may not be suitable for improving the dispersion of the linear conductive material. In addition, it may result in imbalance between interactions between the aromatic ring and the linear conductive material in the linear conductive material dispersion and interactions by hydrogen bonds between -OH of the phenol-based compound and the polymer dispersant, thereby failing to properly reduce the viscosity of the linear conductive material dispersion and suppress the increase in viscosity over time.

Meanwhile, the phenol-based compound may be included in an amount of 1 to 100 parts by weight, or 5 to 100 parts by weight, or 10 to 100 parts by weight, based on 100 parts by weight of the polymer dispersant containing amine. When the amounts of the polymer dispersant containing amine and the phenol-based compound fall within the aforementioned ranges, this may have a more beneficial effect on reducing the viscosity of the dispersion and enhancing storage stability.

The dispersion medium (solvent) is a liquid medium for dispersing the linear conductive material, the polymer dispersant and the phenol-based compound containing two or more aromatic rings, and is used to provide the linear conductive material dispersion by pre-dispersion in order to prevent agglomeration that may occur when the linear conductive material is directly mixed with the negative electrode active material to prepare the slurry for granules.

The dispersion medium may include any liquid medium used in the technical field of the present disclosure to dissolve or disperse the linear conductive material, the polymer dispersant and the phenol-based compound containing two or more aromatic rings at or above a predetermined level. The dispersion medium may include a water-based solvent, for example, water.

The linear conductive material dispersion of the present disclosure as described above may be prepared by a preparation method including the steps of: (1) mixing the linear conductive material (for example, carbon nanotubes), the polymer dispersant, the phenol-based compound containing two or more aromatic rings and the dispersion medium to prepare a mixture; and (2) milling the mixture.

In the step (1), the linear conductive material, the polymer dispersant, the phenol-based compound containing two or more aromatic rings and the dispersion medium are mixed to prepare the mixture.

The step of preparing the mixture may be performed under temperature conditions in which the properties of the mixture including viscosity of the mixture do not change by the evaporation of the dispersion medium. For example, the step of preparing the mixture may be performed at the temperature of 50°C or less, and more specifically, 5°C to 50°C.

In the step (2), the mixture is subjected to dispersion processing to prepare the linear conductive material dispersion.

The milling may be, for example, performed by a method using a ball mill, a bead mill, a disc mill, a basket mill or a high pressure homogenizer, and more specifically, a milling method using a disc mill or a high pressure homogenizer.

In the milling by the disc mill, the bead size may be properly determined according to the type and amount of the linear conductive material and the type of the dispersant, and specifically, the bead diameter may be 0.1 mm to 5 mm, and more specifically, 0.5 mm to 4 mm. In addition, the bead milling process may be performed at the speed of 2,000 rpm to 10,000 rpm, and more specifically, 5,000 rpm to 9,000 rpm.

The milling by the high pressure homogenizer is, for example, done by applying pressure to the mixture using a plunger pump of the high pressure homogenizer and forcing it through a narrow opening in a homogenizing valve to create cavitation, shear, impact and explosion forces.

The milling process may be performed according to the degree of dispersion of the linear conductive material dispersion, and specifically, may be performed for 30 minutes to 120 minutes, and more specifically, 60 minutes to 90 minutes.

In an embodiment of the present disclosure, the amount of the binder for granules may be 0.5 to 10 parts by weight, or 0.5 to 8 parts by weight, or 0.5 to 7 parts by weight, or 0.5 to 6 parts by weight, or 0.5 to 5 parts by weight, or 0.5 to 4 parts by weight, or 0.5 to 2 parts by weight, or 1 to 8 parts by weight, or 1 to 7 parts by weight, or 1 to 6 parts by weight, or 1 to 5 parts by weight, or 1 to 4 parts by weight, or 1 to 2 parts by weight, based on 100 parts by weight of the granules. When the amount of the binder for granules falls within the aforementioned range, the binder for granules plays a role in connecting and holding the silicon-based active material and the linear conductive material together within the granules, thereby minimizing the influence of volume expansion of the silicon-based active material, and preventing the resistance rise caused by blockage of lithium ion movement when the granules are used in negative electrodes of secondary batteries, leading to improved cycling characteristics of secondary batteries.

In an embodiment of the present disclosure, the binder for granules may include at least one of a linear binder or a dot-type binder.

The linear binder acts as a binding agent in the composition including the active material, and may refer to a polymer compound having a structure in which polymer chains are mainly arranged linearly without branches, or a limited branched or network structure by including crosslinking or radically polymerizable monomers. The linear binder is generally dissolved in a solvent, and the polymer exists in a homogeneous solution state without a particulate form. The linear binder may be evenly mixed with the active material and the conductive material in the slurry when dissolved, and after the manufacture of the electrode, may play a role in stably binding the active material and the conductive material to the current collector by forming a film or an adhesive layer through interactions between the polymer chains during drying and thermal treatment.

The dot- type binder may refer to a binder which, when dispersed in a solvent, does not completely dissolve therein but maintains a dot-like morphology having a size on the order of several hundred nanometers. Owing to such morphology, the binder exhibits excellent dispersibility, can effectively coat or surround the surface of the active material particles, and has a relatively low viscosity with respect to the solid content, thereby allowing easy control of the binder content relative to the active material. When the dot-type binder is used together with the silicon-based active material and the linear conductive material within the granules, it may sufficiently cover the active material surface and maintain the dispersion of the linear conductive material.

The dot-type binder is not limited to a particular shape, but a particulate phase is preferable because it has a good binding ability and may suppress capacitance decline of electrodes or degradation over repeated charging/discharging. Examples of the particulate-phase dot-type binder may include a dispersed form of dispersible binder particles in a solvent such as water, like latex, and a powder phase obtained by drying the dispersion.

Meanwhile, the binder such as polytetrafluoroethylene (PTFE) has a linear polymer chain structure, but does not dissolve in the solvent and stays in a solid powder state. This binder is generally used in a dry process and is not processed into a slurry using a solvent or dispersion medium. The PTFE binder may be present in the electrode composition in a fibrous phase or a combination of particulate phase and fibrous phase, and play a role in binding the active material and the conductive material to the current collector through thermal compression or physical entanglement. Accordingly, as opposed to typical slurry-based linear binders or dot-type binders, the PTFE binder may have a binding mechanism based on structural entanglement and compressive force rather than solubility or dispersibility.

The linear binder may include an acrylate-based polymer.

Examples of the acrylate-based polymer may include polymer including monomer units derived from acrylic acid ester and/or methacrylic acid ester. The ratio of the monomer unit derived from acrylic acid ester and/or methacrylic acid ester in the acrylate-based polymer may be usually 40 wt% or more, preferably 50 wt% or more, and more preferably 60 wt% or more. Specific examples of the acrylate-based polymer may include a crosslinked acrylate-based polymer such as an acrylamide-acrylate copolymer, an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacrylate copolymer, an acrylic acid 2-ethylhexyl-styrene-methacrylic acid-ethyleneglycoldimethacrylate copolymer, a butyl acrylate-acrylonitrile-diethyleneglycoldimethacrylate copolymer or a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer or an ethylene-ethyl methacrylate copolymer; or a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile or methacrylic acid.

According to an embodiment of the present disclosure, the acrylate-based polymer may include an acrylamide-acrylate copolymer.

The dot-type binder may include a diene-based polymer, a styrene-based polymer, or two or more thereof.

Examples of the diene-based polymer may include polymer including monomer units derived from conjugated dienes such as butadiene or isoprene, and hydrogenated products thereof. The ratio of the conjugated diene-derived monomer unit in the diene-based polymer may be usually 40 wt% or more, preferably 50 wt% or more, and more preferably 60 wt% or more. Specifically, the diene-based polymer may include a conjugated diene homopolymer such as polybutadiene or polyisoprene; an aromatic vinyl-conjugated diene copolymer such as a styrene-butadiene copolymer (SBR) with carboxyl modification; a cyanated vinyl-conjugated diene copolymer such as an acrylonitrile-butadiene copolymer (NBR); hydrogenated SBR or hydrogenated NBR.

The styrene-based polymer may include polymer having styrene monomer-derived repeat units, for example, a styrene homopolymer (polystyrene) or a styrene copolymer. Examples of the styrene copolymer may include a block copolymer such as a styrene-ethylene-butadiene copolymer, a styrene-butadiene-propylene copolymer, a styreneisoprene copolymer, a styrene-n-butyl acrylate-itaconic acid-methyl methacrylate-acrylonitrile copolymer, a styrene-n-butyl acrylate-itaconic acid-methyl methacrylate-acrylonitrile copolymer, a styrene-butadiene block copolymer, a styrene-butadienestyrene·block copolymer, a styrene-ethylene-butylene-styrene·block copolymer, a styreneisoprene·block copolymer or a styrene-ethylene-propylene-styrene·block copolymer.

In addition, in an embodiment of the present disclosure, the binder for granules may include the linear binder and the dot-type binder. In an embodiment of the present disclosure, the binder may include the acrylate-based polymer (for example, an acrylamide-acrylate copolymer or an acrylamide-acrylic acid-acrylonitrile copolymer) as the linear binder, and the diene-based polymer or styrene-based polymer (for example, a styrene-butadiene copolymer (SBR)) as the dot-type binder.

When the binder for granules includes both the linear binder and the dot-type binder, this may provide a synergistic effect on improving mechanical, electrical and chemical stability in electrodes and secondary batteries, which may be advantageous in the secondary battery design requiring high energy density, long life and high reliability.

Because it has a long and continuous molecular structure, the linear binder may play a role in increasing the bond strength between the active material and the current collector in electrodes, and effectively distributing mechanical stress that may occur in the manufacture of electrodes and during operation of secondary batteries, thereby preventing delamination or cracks in electrodes, and because it has a three-dimensional binding structure, the dot-type binder may play a role in locally improving adhesion strength, and absorbing stress caused by volume expansion during charging/discharging, thereby preventing physical damage to electrodes caused by repeated charge/discharge, and accordingly, the combined use of the linear binder and the dot-type binder may improve mechanical stability of electrodes, and maintain stability over repeated charge and discharge cycles, thereby extending battery life.

In addition, the linear binder may help achieve an even distribution of the active material within electrodes, thereby improving conductivity and electrical contact of electrodes, and the dot-type binder may form strong bonds at small contact points to optimize the contact between the active material and the electrolyte, thereby contributing to lower resistance to ion movement, and accordingly the combination of the linear binder and the dot-type binder may form the movement pathways of ions and electrons within electrodes more efficiently, thereby improving the energy density and output characteristics.

According to an embodiment of the present disclosure, when the binder for granules includes the linear binder and the dot-type binder, a weight ratio of the linear binder to the dot-type binder may be 70:30 to 30:70, or 60:40 to 40:60, or 70:50 to 50:70. When the weight ratio of the linear binder to the dot-type binder falls within the aforementioned range, it may be possible to maximize the synergy effect of the combined use of the linear binder and the dot-type binder, thereby improving mechanical stability of electrodes and increasing battery life over repeated charge and discharge cycles.

According to an embodiment of the present disclosure, the granules may include 80 to 98 parts by weight of the silicon-based active material, 0.5 to 10 parts by weight of the linear conductive material and 0.5 to 10 parts by weight of the binder for granules. Alternatively, the granules may include the silicon-based active material in an amount of 85 to 95 parts by weight, the linear conductive material in an amount of 0.5 to 5 parts by weight, and the binder for granules in an amount of 0.5 to 8 parts by weight, or 0.5 to 7 parts by weight, or 0.5 to 6 parts by weight, or 0.5 to 5 parts by weight, or 0.5 to 4 parts by weight, or 1 to 8 parts by weight, or 1 to 7 parts by weight, or 1 to 6 parts by weight, or 1 to 5 parts by weight, or 1 to 4 parts by weight.

When the amounts of the silicon-based active material, the linear conductive material and the binder for granules fall within the aforementioned ranges, the cohesion strength between the active materials in negative electrodes may increase, and the dispersion of the linear conductive material and the binder for granules may be significantly improved, so cell performance such as life characteristics of electrochemical devices including the negative electrodes may be significantly improved.

In addition to the silicon-based active material, the granules may further include another type of negative electrode active material.

Examples of the other type of negative electrode active material may include carbon-based active materials such as non-graphitizing carbon, graphite-based carbon (natural graphite, artificial graphite); metal composite oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Groups 1, 2, and 3 elements in the periodic table, halogen; 0≤x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O_{4,} Sb₂O₅, GeO, GeO₂, Bi₂O_{3,} Bi₂O₄ and Bi₂O_{5;} conductive polymers such as polyacetylene; Li-Co-Ni based materials. According to an embodiment of the present disclosure, the granules may further include at least one type of carbon-based active material of natural graphite or artificial graphite.

According to an embodiment of the present disclosure, the granules may include 30 to 70 parts by weight of the silicon-based active material, 30 to 70 parts by weight of the other type of negative electrode active material, 0.5 to 10 parts by weight of the linear conductive material, and 0.5 to 10 parts by weight of the binder.

Alternatively, the granules may include 35 to 70 parts by weight of the silicon-based active material, 35 to 70 parts by weight of the other type of negative electrode active material, 0.5 to 5 parts by weight of the linear conductive material, and 0.5 to 5 parts by weight of the binder.

In an embodiment of the present disclosure, the silicon-based active material may be included in an amount of 75 wt% or more or 90 wt% or more based on the total weight of the granules, and the binder for granules may be included in an amount of 20 wt% or less or 10 wt% or less.

The conductive material for granules may be included in an amount of 0.1 wt% to 20 wt%, and preferably 0.1 wt% to 10 wt% based on 100 wt% of the granules. For example, the conductive material may be included in the granules in an amount of about 0.1 wt% to 5 wt%.

According to an embodiment of the present disclosure, the amount of the silicon-based active material in the granules may be 75 wt% to 98 wt%. Within the aforementioned range, the amount of the binder for granules may be 0.5 wt% to 10 wt%, and the amount of the conductive material for granules may be 0.5 wt% to 5 wt%. According to another embodiment, the amount of the silicon-based active material may be 90 wt% to 98 wt%, the amount of the binder for granules may be 0.5 wt% to 5 wt%, and the amount of the conductive material for granules may be 0.5 wt% to 5 wt%.

In an embodiment of the present disclosure, the granules may include a surface portion and a central portion which is the remaining area excluding the surface portion. Specifically, the granule center may be defined as the intersection of the major axis (the longest portion of the granule) and the minor axis (the shortest portion of the granule) of the granule, the surface portion may be defined as an area obtained by connecting locations a predetermined distance down away from each location on the granule surface toward the granule center, and the central portion may be defined as the remaining area excluding the surface portion.

Together with or independently of this, the granules have a larger amount (wt%) (Bₛ/Gₜ) of the binder for granules included in the surface portion than the amount (wt%) (B_{c}/Gₜ) of the binder for granules included in the central portion based on the total weight 100 wt% of the granules. Here, B_{c} denotes the weight of the binder for granules included in the central portion, Bₛ denotes the weight of the binder for granules included in the surface portion, and Gₜ denotes the total weight of granule particles.

Together with or independently of this, the granules have a larger amount (vol%) (Bₛ/Gₜ) of the binder for granules included in the surface portion than the amount (vol%) (B_{c}/Gₜ) of the binder for granules included in the central portion based on the total volume 100 vol% of the granules. Here, B_{c} denotes the volume of the binder for granules included in the central portion, Bₛ denotes the volume of the binder for granules included in the surface portion, and Gₜ denotes the total volume of granule particles.

In an embodiment of the present disclosure, the surface portion may refer to a surface area up to 30% of the distance (center distance) from each location on the surface portion to the granule center in the inward direction from the granule surface. In an embodiment of the present disclosure, the surface portion may refer to a surface area up to 30%, 20%, 15%, 10% or 5% of the center distance from the granule surface. Preferably, the surface portion may refer to a surface area up to 20% of the center distance from the granule surface.

As described above, in the present disclosure, the granule center may be defined as the intersection of the major axis (the longest portion of the granule) and the minor axis (the shortest portion of the granule) of the granule.

Meanwhile, in an embodiment of the present disclosure, the surface portion may refer to an area of 70% or more of the center distance to the granule surface in the outward direction from the granule center. In an embodiment of the present disclosure, the surface portion may, for example, refer to an area of 80% or more, 85% or more, 90% or more, or 95% or more of the center distance to the granule surface.

In an embodiment of the present disclosure, the granule center may refer to a location at half the longest diameter of the granule. In the present disclosure, the center distance may refer to the distance from the granule center to each location on the granule surface. In an embodiment of the present disclosure, the surface portion and the central portion may be distinguished based on points at the equal distance from each surface of the granule along each center distance, and specifically, points up to 30%, 20%, 10%, 5% or 1% of the corresponding center distance from the surface.

In an embodiment of the present disclosure, the amount of the binder for granules in the area of 90% or more of the center distance from the granule particle center to the granule surface may be 50 wt% or more, 60 wt% or more, 70 wt% or more, 80 wt% or more, or 90 wt% or more based on the total weight 100 wt% of the granules in the corresponding area.

In another embodiment of the present disclosure, the amount of the binder for granules in the area of 95% or more of the particle center distance from the granule center to the granule surface may be 50 wt% or more, 60 wt% or more, 70 wt% or more, 80 wt% or more, or 90 wt% or more based on the total weight 100 wt% of the granules in the corresponding area.

In another embodiment of the present disclosure, the amount of the binder for granules in the area of 99% or more of the center distance from the granule particle center to the granule surface may be 50 wt% or more, 60 wt% or more, 70 wt% or more, 80 wt% or more, or 90 wt% or more based on the total weight 100 wt% of the granules in the corresponding area.

In an embodiment of the present disclosure, the amount of the binder for granules in the area of 90% or more of the center distance from the granule particle center to the granule surface may be 50 vol% or more, 60 vol% or more, 70 vol% or more, 80 vol% or more, or 90 vol% or more based on the total volume 100 vol% of the granules in the corresponding area.

In another embodiment of the present disclosure, the amount of the binder for granules in the area of 95% or more of the particle center distance from the granule center to the granule surface may be 50 vol% or more, 60 vol% or more, 70 vol% or more, 80 vol% or more, or 90 vol% or more based on the total volume 100 vol% of the granules in the corresponding area.

In another embodiment of the present disclosure, the amount of the binder for granules in the area of 99% or more of the center distance from the granule particle center to the granule surface may be 50 vol% or more, 60 vol% or more, 70 vol% or more, 80 vol% or more, or 90 vol% or more based on the total volume 100 vol% of the granules in the corresponding area.

In an embodiment of the present disclosure, the amount of the binder for granules in the granule surface area up to 10% of the center distance from the granule particle surface may be 50 wt% or more, 60 wt% or more, 70 wt% or more, 80 wt% or more, or 90 wt% or more based on the total weight 100 wt% of the granules in the corresponding area.

In another embodiment of the present disclosure, the amount of the binder for granules in the granule surface area up to 5% of the center distance from the granule particle surface may be 50 wt% or more, 60 wt% or more, 70 wt% or more, 80 wt% or more, or 90 wt% or more, based on the total weight 100 wt% of the granules in the corresponding area.

In another embodiment of the present disclosure, the amount of the binder for granules in the granule surface area up to 1% of the center distance from the granule particle surface may be 50 wt% or more, 60 wt% or more, 70 wt% or more, 80 wt% or more, or 90 wt% or more based on the total weight 100 wt% of the granules in the corresponding area.

In an embodiment of the present disclosure, the amount of the binder for granules in the granule surface area up to 10% of the center distance from the granule particle surface may be 50 wt% or more, 60 wt% or more, 70 wt% or more, 80 wt% or more, or 90 wt% or more based on the total weight 100 wt% of the granules in the corresponding area.

In another embodiment of the present disclosure, the amount of the binder for granules in the granule surface area up to 5% of the center distance from the granule particle surface may be 50 wt% or more, 60 wt% or more, 70 wt% or more, 80 wt% or more, or 90 wt% or more based on the total weight 100 wt% of the granules in the corresponding area.

In another embodiment of the present disclosure, the amount of the binder for granules in the area of 1% or more of the center distance from the granule particle surface to the granule surface may be 50 wt% or more, 60 wt% or more, 70 wt% or more, 80 wt% or more, or 90 wt% or more based on the total 100 wt% of the granules in the corresponding area.

According to an embodiment of the present disclosure, as confirmed, the surface portion area may have a larger amount of the binder for granules up to a predetermined depth in the direction from the surface to the particle center, and the area other than the surface portion, that is, the central portion (core) surrounded by the surface portion may have a lower distribution of the binder for granules than the surface portion.

Describing the granules in more detail, the granules may have the central portion including a plurality of silicon-based active materials; and the surface portion located at all or part of the outside of the central portion and including the binder for granules binding the silicon-based active materials. That is, in the central portion of the granules, the plurality of silicon-based active materials may be in surface contact, line contact, point contact or two or more thereof to form an agglomerate, and in the surface portion of the granules, the binder for granules may be located at all or part of the outside of the agglomerate to bind and hold the plurality of silicon-based active materials in the central portion of the granules together.

According to an embodiment of the present disclosure, a small amount of binder for granules may be further included in the central portion to connect and hold the plurality of silicon-based active materials in the central portion together. However, as described above, the amount of binder for granules in the surface portion is preferably present at a larger ratio than the amount of binder for granules in the central portion.

Meanwhile, in an embodiment of the present disclosure, the granules may have an aspect ratio of 0.5 to 0.94, or 0.7 to 0.93, or 0.75 to 0.91. The aspect ratio may refer to a ratio of the major axis length to the minor axis length of the granule. In another embodiment of the present disclosure, an average aspect ratio of the granules may have a value of 0.5 to 0.94, or 0.7 to 0.93, or 0.75 to 0.91, and in this case, the average aspect ratio may refer to a ratio of the average major axis length to the average minor axis length of granule particles. In this instance, the average minor axis length may refer to the average of lengths in the axial direction having the shortest length of the granules, and the average major axis length may refer to the average of lengths in the axial direction having the longest length of the granules. When the aspect ratio or the average aspect ratio of the granules falls within the aforementioned range, it is advantageous in terms of sufficient flowability suitable for the process.

According to an embodiment of the present disclosure, the granules may further include the dispersant. The dispersant may include carboxymethylcellulose (CMC). When the dispersant is further included in the composition including the silicon-based active material, the linear conductive material, the binder for granules and the aqueous dispersion medium in the step of producing the granules as described below, the dispersant contributes to an even distribution of solid components such as the silicon-based active material, the linear conductive material and the binder for granules within the composition, thereby improving stability of the composition and controlling the viscosity and flowability of the composition. The quality and performance of the granules produced through the composition may be improved.

According to an aspect of the present disclosure, there is provided a negative electrode for an electrochemical device including a current collector; and a negative electrode active material layer present on the current collector, wherein the negative electrode active material layer includes granules including a silicon-based active material, a linear conductive material and a binder for granules.

The negative electrode active material layer includes granules, a carbon-based active material, and a binder for the negative electrode layer.

The negative electrode active material layer may include the granules in an amount of 1 to 10 parts by weight, or 2 to 8 parts by weight, or 1 to 5 parts by weight, or 5 to 10 parts by weight of the granules, the carbon-based active material in an amount of 70 to 99 parts by weight, or 80 to 98 parts by weight, or 70 to 92 parts by weight, or 92 to 99 parts by weight, and the binder for the negative electrode layer in an amount of 0.1 to 10 parts by weight, or 0.8 to 5 parts by weight, or 0.1 to 2 parts by weight, or 2 to 10 parts by weight, or 2 to 5 parts by weight, based on 100 parts by weight of the negative electrode active material layer.

The negative electrode active material layer may include the granules, the carbon-based active material, the binder for the negative electrode layer and a conductive material for the negative electrode layer.

The negative electrode active material layer may include the granules in an amount of 1 to 10 parts by weight, or 2 to 8 parts by weight, or 1 to 5 parts by weight, or 5 to 10 parts by weight, the carbon-based active material in an amount of 70 to 99 parts by weight, or 80 to 98 parts by weight, or 70 to 92 parts by weight, or 92 to 99 parts by weight, the conductive material for the negative electrode layer in an amount of 0.01 to 5 parts by weight, or 0.1 to 2 parts by weight, or 0.01 to 1 part by weight, or 1 to 5 parts by weight, or 1 to 2 parts by weight, and the binder for the negative electrode layer in an amount of 0.1 to 10 parts by weight, or 0.8 to 5 parts by weight, or 0.1 to 2 parts by weight, or 2 to 10 parts by weight, or 2 to 5 parts by weight, based on 100 parts by weight of the negative electrode active material layer.

In an embodiment of the present disclosure, the negative electrode active material layer may have a porosity of 20 vol% to 40 vol%, and when the porosity falls within the aforementioned range, electrolyte wetting, shape stability and ionic conductivity may be further improved.

Meanwhile, according to an embodiment of the present disclosure, the thickness of the negative electrode active material layer may be, for example, 30 µm to 300 µm, but is not limited thereto.

According to another embodiment of the present disclosure, the negative electrode active material layer may be a single layer including one unit active material layer.

According to an embodiment of the present disclosure, the negative electrode active material layer may have a multilayer structure including two or more unit active material layers stacked together. In this case, the electrode material included in each unit active material layer, for example, the electrode active material and the binder for granules may be identical or different in each layer, but are not limited thereto.

The carbon-based active material may include carbon, for example, non-graphitizing carbon, graphite-based carbon such as natural graphite or artificial graphite.

In an embodiment of the present disclosure, the binder for the negative electrode layer may include at least one of the binders for granules described above. Specifically, the binder for the negative electrode layer may include a styrene butadiene copolymer (SBR).

In addition, the conductive material for the negative electrode layer may include any conductive material commonly used in the electrode, i.e., platy, dot-like, linear or fibrous conductive materials, and may include, for example, carbon black, Denka black, acetylene black, Ketjen black, channel black, furnace black, lamp black, thermal black, or two or more thereof, but is not limited thereto.

When the amounts of the granules, the carbon-based active material, the conductive material for the negative electrode layer and the binder for the negative electrode layer in the negative electrode active material layer fall within the aforementioned ranges, it may be more advantageous in terms of providing optimal energy density and sufficient life characteristics at the same time.

According to an embodiment of the present disclosure, the total parts by weight of the linear conductive material of the granules and the binder for granules may be larger than the total parts by weight of the conductive material for the negative electrode layer and the binder for the negative electrode layer. Specifically, the total parts by weight of the linear conductive material of the granules and the binder for granules may be 1.1 to 10 times, or 1.5 to 5 times larger than the total parts by weight of the conductive material for the negative electrode layer and the binder for the negative electrode layer. In this case, when the total parts by weight of the linear conductive material of the granules and the binder for granules are larger than the total parts by weight of the conductive material for the negative electrode layer and the binder for the negative electrode layer, it may be more advantageous in that a sufficient amount of the high-modulus binder for granules can be positioned on the surface of the silicon-based active material.

Meanwhile, in some cases, the negative electrode active material layer may further include a filler to suppress the expansion of the negative electrode active material layer. The filler is not limited to a particular type and may include any fibrous material that does not cause any chemical change in the corresponding battery, for example, olefin-based polymer such as polyethylene or polypropylene; or fibrous materials such as glass fibers or carbon fibers.

The current collector is not limited to a particular type and may include any material having high conductivity without causing any chemical change in the battery, for example, stainless steel, aluminum, nickel, titanium, calcined carbon, copper, or aluminum or stainless steel treated with carbon, nickel, titanium or silver on the surface. Additionally, the current collector may have the microtextured surface to increase the adhesion strength of the electrode active material, and may come in various type, for example, a film, a sheet, a foil, a net, a porous body, a foam or a nonwoven fabric.

In an embodiment of the present disclosure, the current collector may have a primer layer in whole or in part.

The primer layer may include a binder for the primer layer and a conductive material for the primer layer, and the sum of amounts of the binder and the conductive material in the primer layer may be 90 wt% or more.

The electrode according to an embodiment of the present disclosure includes the negative electrode active material layer including the granules, and in this instance, when the primer layer includes the binder and the conductive material such that the sum of amounts of them is 90 wt% or more, it may be possible to ensure time-dependent stability of the primer layer, thereby achieving good properties such as adhesion strength and life characteristics, but the present disclosure is not limited thereto.

According to an embodiment of the present disclosure, the primer layer includes the binder for the primer layer and the conductive material for the primer layer, and may further include a dispersant.

According to an embodiment of the present disclosure, the primer layer may include the binder for the primer layer and the conductive material for the primer layer, but may substantially not include the dispersant.

According to an embodiment of the present disclosure, the binder for the primer layer may include any known binder used in the primer layer without limitation.

According to another embodiment of the present disclosure, the binder for the primer layer may preferably include any type of polymer that ensures time-dependent stability of the primer layer. Specifically, the binder for the primer layer may have a glass transition temperature Tg of 45°C or less.

According to another embodiment of the present disclosure, the binder for the primer layer may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more thereof. Specifically, the binder for the primer layer may include styrene butadiene rubber (SBR), nitrile butadiene rubber (NBR), polymethylmethacrylate, polyethylhexylacrylate, polybutylacrylate, or two or more thereof.

According to another embodiment of the present disclosure, the binder for the primer layer may include any one selected from the above-described types of binders having the above-described glass transition temperature values or a mixture thereof.

According to another embodiment of the present disclosure, the binder for the primer layer may include styrene butadiene rubber (SBR) having the glass transition temperature Tg of -40°C to 45°C, nitrile butadiene rubber (NBR) having the glass transition temperature Tg of -40°C to 45°C, or a mixture thereof.

According to an embodiment of the present disclosure, the conductive material for the primer layer may have a specific surface area of 30 m²/g to 1,400 m²/g, and a spherical shape. In this instance, the primary particle size of the conductive material having the spherical shape may be, for example, 10 nm to 100 nm, and specifically 15 nm to 70 nm, but is not limited thereto.

According to another embodiment of the present disclosure, the conductive material for the primer layer may have a tubular (tube type) shape with the specific surface area of 10 m²/g to 400 m²/g. In this instance, in the conductive material having the tubular shape, the diameter of a cross section in a direction perpendicular to the length direction may be 0.1 nm to 3 nm, and specifically 0.3 nm to 1.5 nm, but is not limited thereto.

The conductive material for the primer layer is not limited to a particular type and may include any material having conductivity without causing any chemical change in the corresponding battery, and for example, may include graphite such as natural graphite or artificial graphite; carbon black-based carbon compounds such as carbon black, acetylene black, Ketjen black, channel black, furnace black, lamp black or thermal black; conductive fibers such as carbon fibers or metal fibers; fluorocarbon; metal powder such as aluminum powder or nickel powder; conductive whiskers such as zinc oxide whiskers or potassium titanate whiskers; conductive metal oxide such as titanium oxide; or conductive materials such as polyphenylene derivatives. Specifically, to evenly mix the conductive material and improve conductivity, the conductive material may include activated carbon, graphite, carbon black, carbon nanotubes or a mixture thereof, and more specifically, activated carbon.

According to an embodiment of the present disclosure, the primer layer may include the above-described composition and have a thickness of 300 nm to 1.5 µm, and specifically 700 nm to 1.3 µm, but is not limited thereto.

The degree of dispersion of the granules within the negative electrode active material layer is 1 x 10⁻² to 10 x 10⁻², or 1 x 10⁻² to 5 x 10⁻², or 1 x 10⁻² to 4.4 x 10⁻², or 4.4 x 10⁻² to 10 x 10⁻², or 2 x 10⁻² to 5 x 10⁻², or 2 x 10⁻² to 4.4 x 10⁻², or 4.4 x 10⁻² to 5 x 10⁻².

When the degree of dispersion is zero (0), it signifies that the granules including the silicon-based active material are evenly distributed within the negative electrode active material layer, and as the degree of dispersion is closer to 1, it signifies that the granules including the silicon-based active material bind together at some areas in the negative electrode active material layer. Accordingly, when the degree of dispersion of the granules within the negative electrode active material layer falls within the aforementioned range, the even distribution of the granules throughout the negative electrode active material layer may preferably prevent degradation caused by shrinkage and expansion of the silicon-based active material, improve conductivity in the negative electrode active material layer and remarkably enhance electrochemical performance of the secondary battery such as life characteristics.

The standard deviation of dispersion of the granules within the negative electrode active material layer is 1 x 10⁻³ to 4 x 10⁻³. According to an embodiment of the present disclosure, the standard deviation of dispersion of the granules within the negative electrode active material layer may be 1 x 10⁻³ to 3.5 x 10⁻³, or 1.5 x 10⁻³ to 3.5 x 10⁻³, or 1 x 10⁻³ to 2.85 x 10⁻³, or 2.85 x 10⁻³ to 4 x 10⁻³, or 1.5 x 10⁻³ to 2.85 x 10⁻³, or 2.85 x 10⁻³ to 3.5 x 10⁻³.

When the standard deviation of dispersion of the granules within the negative electrode active material layer falls within the aforementioned range, it may be advantageous because the negative electrode may be manufactured with reproducibility and ensure high quality uniformity due to a small deviation between the degrees of dispersion of the granules.

In this instance, the degree of dispersion of the granules within the negative electrode active material layer and its standard deviation may be determined by the following method.

First, the target negative electrode for evaluating the degree of dispersion of the granules within the negative electrode active material layer may be selected, a cross section of the negative electrode active material layer may be measured using a scanning electron microscope (SEM) (for example, manufacturer: JEOL, model name: JSM-7200) to obtain an image, and the image obtained by SEM measurement may be analyzed pixel by pixel through an image analysis program.

The contrast between Si of the silicon-based active material and the carbon-based active material (for example, graphite) in the negative electrode active material layer may be used to identify whether the image pixels represent the carbon-based active material or the silicon-based active material.

For example, the image pixels of the analysis area in the negative electrode active material layer may be divided into segments of 20 X 20 (width X height), an area ratio of a region of interest (where the granules including the silicon-based active material are present) in each segment may be calculated, and sample variance of 400 area ratios may be defined as the degree of dispersion.

In this instance, the sample variance may be calculated from each value of 400 area ratios using the following equation and provided as the degree of dispersion.${s}^{2} = Σ {\left(y-y′\right)}^{2} / \left(n-1\right)$

In the above Equation, s² denotes the sample variance, i.e., the degree of dispersion, and represents the variance calculated from the sample. To distinguish it from population variance σ², it is indicated as s².

Σ(y - y')² is the sum of squared deviations,
where y: each observation
y': sample mean (y-bar)
(y - y'): difference (deviation) between each observation and sample mean
(y - y')²: squared deviation
Σ: add squared deviation to all observations
n - 1 denotes the degree of freedom,
where n: sample size (number of observations)
n-1 is used instead of n due to Bessel's correction.

In the above equation, the reason to divide the sum of squared deviations by 'n-1' is that when calculating the variance using the sample mean, because the sample mean is a value calculated from sample data, a constraint is created, that is, when n-1 deviations are determined, because the sum of n deviations is always 0, the last one is automatically determined, and accordingly, the actual degree of freedom is n-1, and through this, an unbiased estimator of the population variance may be obtained.

Through the above formula, the degree of spread of the sample data may be accurately measured.

Although the above-described example of calculation of the degree of dispersion shows that the image pixels of the analysis area in the negative electrode active material layer may be divided into segments of 20 X 20 (width X height), in order to analyze the degree of dispersion more precisely, various segments such as segments of larger dimensions, for example, 900 segments of 30 X 30 or 2500 segments of 50 X 50 may be set in the calculation of the degree of dispersion.

In an embodiment of the present disclosure, the cross section of the negative electrode active material layer for the evaluation of the degree of dispersion of granules within the negative electrode active material layer may be measured using SEM to obtain four SEM images of different areas, the degree of dispersion may be calculated from each image based on the area where the granules including the silicon-based active material do not exist among the total number of locations set to 400 segments of 20 X 20, and the standard deviation of the calculated degree of dispersion of the four images may be calculated.

According to an embodiment of the present disclosure, the SEM image may have the magnification of 100 to 500 times, or 200 to 400 times, and the length and width of 500 mm to 2000 mm and 700 mm to 1500 mm, or 900 mm to 1300 mm and 1000 mm to 1200 mm, respectively.

The volume expansion ratio of the negative electrode active material layer is 3% to 35%, 3% to 33%, or 5% to 31%, or 14.1% to 30.6%, or 3% to 14.1%, or 14.1% to 35%, 3% to 16.6%, or 16.6% to 35%, or 3% to 30.6%. When the volume expansion ratio of the negative electrode active material layer falls within the aforementioned range, the linear conductive material and the binder for granules included together with the silicon-based active material within the granules may connect and hold the silicon-based active material and the volume expansion ratio may be controlled below the inherent expansion ratio of the silicon-based active material, thereby stably maintaining the conductive networks formed by the linear conductive material within the negative electrode active material layer, resulting in improved resistance characteristics and enhanced life stability of electrochemical devices including the same.

The volume expansion ratio of the negative electrode active material layer may be calculated through the following equation using the thickness of the negative electrode active material layer measured using an X-ray microscope.

The volume expansion ratio of the negative electrode active material layer may be defined by the equation below. 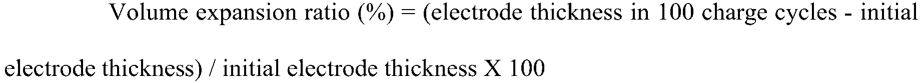 Volume expansion ratio (%) = (electrode thickness in 100 charge cycles - initial electrode thickness) / initial electrode thickness X 100

According to an aspect of the present disclosure, there is provided a method for manufacturing the negative electrode for the electrochemical device according to an embodiment of the present disclosure, including the step of forming the negative electrode active material layer using the granules including the silicon-based active material, the linear conductive material and the binder for granules.

According to an embodiment of the present disclosure, the negative electrode including the granules may be an electrode obtained by various manufacturing processes, for example, a wet process or a dry process.

The wet process may include the step of mixing the granules with the binder for the negative electrode layer and optionally the conductive material for the negative electrode layer in the dispersion medium, applying the mixture to the current collector and drying.

The dry process may include the steps of dry mixing the granules with the fibrillatable binder, or dry mixing the granules with the fibrillatable binder and the conductive material for the negative electrode layer to prepare a mixture; kneading the as-prepared mixture to produce a mixture mass, and grinding the mixture mass to obtain electrode mixture granules; feeding the electrode mixture granules between a plurality of rolls to perform calendaring to form an electrode film; and laminating the electrode film on the metal current collector.

In the step of preparing the mixture, in addition to the granules and the fibrillatable binder, the conductive material for the negative electrode layer may be further included. In this instance, the step of preparing the mixture may be performed without a dispersion medium, or may be performed with an addition of a very small amount of at least one additive of a dispersion medium, a lubricant or a processing aid. Here, the additive may include any substance commonly used in the electrode process. Here, the "very small amount" refers to an amount that is too small to substantially affect the appearance, flowability or viscosity of the mixture when used in the step of preparing the mixture, and may be, for example, less than 0.1 wt% based on the total 100 wt% of the mixture.

In this instance, the kneading conditions may include a range between 70°C and 200°C and pressure equal to or higher than normal pressure.

The mixing may be performed in a mixer at 5,000 rpm to 20,000 rpm for 30 seconds to 2 minutes, and specifically at 10,000 rpm to 15,000 rpm for 30 seconds to 1 minute, in order to ensure uniformity.

The fibrillatable binder is not limited to a particular type and may include any type of binder that can be microfibrillated by the step of producing the mixture granules. Fluorine-containing binders may be more preferable. The microfibrillation refers to a process that breaks down polymer into smaller fragments and may be, for example, performed using a mechanical shear force. A specific example of the fibrillatable binder may include a fluorine-containing polymer, and specifically, may include polytetrafluoroethylene (PTFE) alone, or in addition to the PTFE, may further include at least one of polyvinylidene fluoride (PVdF)-based copolymers such as PVdF or polyvinylidene fluoride-co-hexafluoropropylene (PVdF-HFP).

The kneading is not limited to a specific method. In a specific embodiment of the present disclosure, the kneading may be, for example, performed through a kneader.

Specifically, the kneading may be controlled to the speed of 10 rpm to 100 rpm. For example, the kneading may be controlled to the speed of 20 rpm or more or 70 rpm or less within the aforementioned range. The kneading may be performed for 1 minute to 30 minutes. For example, the kneading may be performed at the speed of 40 rpm to 70 rpm within the aforementioned ranges for 3 minutes to 10 minutes. Meanwhile, the kneading may be controlled to a shear rate ranging from 10/s to 500/s. In a specific embodiment of the present disclosure, the kneading may be performed for 1 minute to 30 minutes, and the shear rate may be controlled within a range between 30/s and 100/s.

Additionally, the kneading step may be performed under the conditions of high temperature and pressure equal to or higher than normal pressure, and more specifically, pressure higher than normal pressure.

More specifically, the kneading may be performed on the mixture in a range between 70°C and 200°C, and specifically between 90°C and 150°C.

In addition, the kneading may be performed under the pressure equal to or higher than normal pressure, specifically the pressure of 1 to 100 atmospheric pressure, and more specifically, 10 to 80 atmospheric pressure. When the pressure falls within the aforementioned range, it may be possible to prevent fiber breakage or overly high density of the mixture mass by the application of too high shear force and pressure. That is, according to the present disclosure, instead of high-shear mixing, the low-shear mixing under the conditions of high temperature and pressure equal to or higher than normal pressure may achieve the intended effect of the present disclosure.

The grinding step may be performed using a blender or a grinder, but is not limited thereto, and specifically, the grinding step may be performed at the speed of 5,000 rpm to 20,000 rpm for 30 seconds to 10 minutes, and specifically at the speed of 10,000 rpm to 18,000 rpm for 30 seconds to 2 minutes.

When the grinding speed and time fall within the aforementioned ranges, sufficient grinding may be done to form the granules in an appropriate size for the formation of a film, and prevent the grinding of the mixture mass into a large amount of fine particles. If necessary, a sieving process may be performed to filter out particles that are smaller or larger than a predetermined size.

The calendering may be, for example, performed by rolls that face each other, and in this instance, the roll temperature may be 50°C to 200°C, and the rotational speed ratio of the rolls may be controlled within a range between 1.0 and 2.0.

In addition, the dry electrode using the granules may include a dry electrode manufactured by directly applying the granules alone or in combination with the binder for the negative electrode layer and/or the conductive material for the negative electrode layer to the current collector, followed by pressing/rolling.

According to an embodiment of the present disclosure, there may be provided a method for manufacturing an electrode according to an embodiment of the present disclosure, including the steps of drying the composition including the silicon-based active material, the linear conductive material, the binder for granules and the aqueous dispersion medium by spray drying to produce the granules;
mixing the granules with the carbon-based active material, the conductive material for the negative electrode layer, the binder for the negative electrode layer and the aqueous dispersion medium (water) for slurry to prepare an electrode slurry; and
applying the electrode slurry to at least one surface of the current collector and drying and pressing/rolling.

First, the composition including the silicon-based active material, the linear conductive material, the binder for granules and the aqueous dispersion medium is dried by spray drying to produce the granules.

The silicon-based active material, the linear conductive material, the binder for granules, and optionally, the additive are dispersed or dissolved in the dispersion medium (the solvent for the binder for granules) to obtain the composition in which the silicon-based active material, the linear conductive material, the binder for granules and/or the additive are dispersed or dissolved.

The dispersion medium used to obtain the slurry is, the most suitably, water, but may include an organic solvent. The organic solvent may include, for example, alkylalcohols such as methylalcohol, ethylalcohol or propylalcohol; alkylketones such as acetone or methylethylketone; ethers such as tetrahydrofuran, dioxane or diglyme; amides such as diethylformamide, dimethylacetoamide, N-methyl-2-pyrrolidone (hereinafter referred to as NMP) or dimethylimidazolidinone; or sulfur-based solvents such as dimethylsulfoxide or sulfolane, but alcohols are preferable. When the organic solvent having lower boiling point than water is used together, the speed of drying in fluidized bed granulation may increase. Additionally, because the dispersion or dissolution of the binder for electrode granules may change, viscosity or flowability of the slurry may be adjusted according to the amount or type of the dispersion medium, in order to improve production efficiency.

The dispersion medium used to prepare the slurry may be included in such an amount that the solids concentration of the composition usually ranges from 1 wt% to 50 wt%, or from 5 wt% to 50 wt%, or from 10 wt% to 30 wt%.

The method or order of dispersing or dissolving the silicon-based active material, the linear conductive material and the binder for granules in the dispersion medium is not limited to a particular one, and may include, for example, a method that adds the silicon-based active material, the linear conductive material and the binder for granules to the dispersion medium and mixes them, a method that dissolves or disperses the binder for granules in the dispersion medium, and finally, adds the silicon-based active material and the linear conductive material and mixes them. The mixing means may include, for example, a ball mill, a sand mill, a bead mill, a pigment dispersion machine, a stone mill, an ultrasonic dispersion machine, a homogenizer or a planetary mixer. The mixing is usually performed in a range between room temperature and 80°C for 10 minutes to a few hours.

Subsequently, the composition is spray-dried. The spray drying method is a method which dries the slurry while spraying the slurry in hot air. The spraying method of equipment used in the spray drying method includes a rotary disc method or a nozzle jet method. The rotary disc method is a method which feeds the composition into almost the center of the disc that rotates at high speed, urges the composition to the periphery of the disc by the centrifugal force of the disc, to create mist and dries it. The rotation rate of the disc relies on the size of the disc, but is usually 5,000 rpm to 35,000 rpm, and preferably 15,000 rpm to 30,000 rpm. Meanwhile, the nozzle jet method is a method which sprays the composition through the thin nozzle together with air or a liquid such as a high pressure fluid to convert into mist and dries it.

In an embodiment of the present disclosure, the temperature of the hot air may be controlled to 80°C to 250°C on the basis of the reactor inlet temperature (input) to form the granule structure having a large amount of the binder for granules on the surface. In the present disclosure, the temperature of the hot air may be controlled to 170°C to 250°C, and more preferably 180°C to 200°C, taking into account the gradient of the amount of the binder for granules and the aspect ratio. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, or a method of cocurrent flow of sprayed droplets and hot air, fall by gravity and countercurrent contact. Meanwhile, in an embodiment of the present disclosure, in the spray drying, the reactor outlet temperature (the temperature of the hot air released from the reactor) may be controlled to 90°C to 130°C.

When the outlet temperature and/or a difference △T between the inlet temperature and the outlet temperature is low, drying is not properly performed, so particles containing a large amount of remaining solvent may be formed, thereby failing to form spherical particles of uniform shape, resulting in agglomeration of the granules or making it amorphous. Meanwhile, when the inlet temperature is overly high and △T is large, granulation fails due to overdrying and particles having very small particle size D50 and low aspect ratio may be produced. Accordingly, to control the particle size to the appropriate level along with high aspect ratio and less agglomeration of the binder for granules, it is necessary to control the inlet temperature and the outlet temperature within the optimum range.

In addition, heating may be optionally performed to cure the surface of the result obtained by the spray drying, i.e., the granules, and in this instance, the thermal treatment temperature may be usually 80°C to 300°C.

Subsequently, the granules are mixed with the carbon-based active material, the conductive material for the negative electrode layer, the binder for the negative electrode layer and the aqueous dispersion medium for the slurry to prepare the electrode slurry.

In this instance, for the aqueous dispersion medium for the slurry, reference may be made to the above-described aqueous dispersion medium, and for the process for preparing the slurry, reference may be made to the process for preparing the composition to produce the granules.

The viscosity of the electrode slurry may be 1,000 to 10,000 cPs, or 1,000 to 9,000 cPs.

Subsequently, the electrode slurry is applied to at least one surface of the current collector, dried and pressed/rolled to form the negative electrode active material layer.

The slurry prepared by the above-described method is applied to the current collector. In this instance, the current collector may have the primer layer including the conductive material for the primer layer and the binder for the primer layer as described above on all or part of at least one surface thereof.

In an embodiment of the present disclosure, the method of coating the slurry on at least one surface of the current collector may include any method commonly used in the art, for example, spray coating, dip coating, gravure coating, slot die coating or comma coating.

In an embodiment of the present disclosure, the drying may be performed by a drying method commonly used to manufacture the electrode. For example, the drying may be performed at 30°C to 100°C, or 40°C to 80°C. Additionally, the drying may be performed by air for 2 to 20 minutes, or 2 to 10 minutes.

The pressing/rolling step is generally performed by a pressing process using rolls. In the roll pressing process, two cylindrical rolls are vertically arranged in parallel with a narrow gap and rotated in opposite directions to apply pressure to the electrode positioned between them. The rolls may control the temperature through heating or cooling.

Additionally, according to an aspect of the present disclosure, there is provided an electrochemical device including the electrode according to an embodiment of the present disclosure.

The electrochemical device may include any device in which electrochemical reaction occurs, and specifically, the electrochemical device may include, for example, any type of primary battery, secondary battery, fuel cell, solar cell or capacitor such as supercapacitor. In the present disclosure, the electrochemical device may preferably include a secondary battery, and more preferably a lithium-ion secondary battery.

In addition, according to an embodiment of the present disclosure, there may be provided an energy storage device including the secondary battery as a unit cell.

The secondary battery may include an electrode assembly including the negative electrode according to an embodiment of the present disclosure, a positive electrode and a separator and a battery case (a cylindrical case, a prismatic case or a pouch) accommodating the electrode assembly together with a lithium-containing nonaqueous electrolyte.

The positive electrode may have a positive electrode active material layer including a positive electrode active material, a binder , and optionally a conductive material on at least one surface of a current collector.

The positive electrode active material may include any type of lithium transition metal oxide, lithium metal iron phosphate or metal oxide, for example, layered compounds such as lithium cobalt oxide (LiCoO₂), lithium nickel oxide (LiNiO₂), or compounds with substitution by one or more transition metals; lithium manganese oxide such as Li₁₊ₓMn₂₋ₓO₄ (x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O_{7;} Ni-site type lithium nickel oxide represented by Chemical Formula LiNi₁₋ₓMₓO₂ (M = Co, Mn, Al, Cu, Fe, Mg, B or Ga, and x = 0.01 to 0.3); lithium manganese composite oxide represented by Chemical Formula LiMn₂₋ₓMₓO₂ (M = Co, Ni, Fe, Cr, Zn or Ta, and x = 0.01 to 0.1) or Li₂Mn₃MO₈ (M = Fe, Co, Ni, Cu or Zn); Li₁₊ₓ(NiₐCo_{b}Mn_{c}Al_{d})₁₋ₓO₂ (x = 0 to 0.03, a = 0.3 to 0.95, b = 0.01 to 0.35, c = 0.01 to 0.5, d = 0.001 to 0.03, a+b+c+d=1) in which parts of Li in the Chemical Formula are replaced by aluminum ions; lithium metal phosphate LiMPO₄ (M = Fe, Co, Ni or Mn), disulfide compounds; or Fe₂(MoO₄)₃, but is not limited thereto.

In an embodiment of the present disclosure, the binder included in the positive electrode is not limited to a particular type and may include any binder material for granules for the electrochemical device, and may include, for example, a diene-based polymer, an acrylate-based polymer, a fluorine-based polymer, a styrene-based polymer, or two or more thereof.

Examples of the diene-based polymer may include polymer including monomer units derived from conjugated dienes such as butadiene or isoprene, and hydrogenated products thereof. The ratio of the conjugated diene-derived monomer unit in the diene-based polymer may be usually 40 wt% or more, preferably 50 wt% or more, and more preferably 60 wt% or more.

Specifically, the diene-based polymer may include a conjugated diene homopolymer such as polybutadiene or polyisoprene; an aromatic vinyl-conjugated diene copolymer such as a styrene-butadiene copolymer (SBR) with carboxyl modification; a cyanated vinyl-conjugated diene copolymer such as an acrylonitrile-butadiene copolymer (NBR); hydrogenated SBR or hydrogenated NBR.

The styrene-based polymer may include polymer having styrene monomer-derived repeat units, for example, a styrene homopolymer (polystyrene) or a styrene copolymer. Examples of the styrene copolymer may include a block copolymer such as a styrene-ethylene-butadiene copolymer, a styrene-butadiene-propylene copolymer, a styreneisoprene copolymer, a styrene-n-butyl acrylate-itaconic acid-methyl methacylate-acrylonitrile copolymer, a styrene-n-butyl acrylate-itaconic acid-methyl methacrylate-acrylonitrile copolymer, a styrene-butadiene block copolymer, a styrene-butadienestyrene·block copolymer, a styrene-ethylene-butylene-styrene·block copolymer, a styreneisoprene·block copolymer or a styrene-ethylene-propylene-styrene·block copolymer.

Examples of the acrylate-based polymer may include polymer including monomer units derived from acrylic acid ester and/or methacrylic acid ester. The ratio of the monomer unit derived from acrylic acid ester and/or methacrylic acid ester in the acrylate-based polymer may be usually 40 wt% or more, preferably 50 wt% or more, and more preferably 60 wt% or more. Specific examples of the acrylate-based polymer may include a crosslinked acrylate-based polymer such as an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacrylate copolymer, an acrylic acid 2-ethylhexyl-styrene-methacrylic acid-ethyleneglycoldimethacrylate copolymer, a butyl acrylate-acrylonitrile-diethyleneglycoldimethacrylate copolymer or a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer or an ethylene-ethyl methacrylate copolymer; or a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile or methacrylic acid. Besides, copolymers of ethylene and (meth)acrylic acid such as ethylene-acrylic acid copolymers and ethylene-methacrylic acid copolymers may be used as a dispersible binder.

The fluorine-based polymer may include polyvinylidene fluoride-based copolymers such as polyvinylidene fluoride (PVdF), polytetrafluoroethylene (PTFE) or PVdF-HFP, specifically, may include polytetrafluoroethylene (PTFE), and more specifically, may be polytetrafluoroethylene (PTFE).

The separator may include a porous polymer film commonly used as the separator, for example, a porous polymer film made of polyolefin-based polymer such as an ethylene homopolymer, a propylene homopolymer, an ethylene/butene copolymer, an ethylene/hexene copolymer or an ethylene/methacrylate copolymer, used alone or in stack. In addition, an insulating thin film having high ionic permeability and mechanical strength may be used. The separator may include a safety reinforced separator (SRS) having a ceramic thin coating on the surface of the separator. In addition, the separator may include a porous nonwoven fabric, for example, a nonwoven fabric made of high-melting-point glass fibers or polyethylene terephthalate fibers, but is not limited thereto.

The electrolyte solution includes a lithium salt as an electrolyte and an organic solvent for dissolving the lithium salt.

The lithium salt is not limited to a particular type and may include any lithium salt commonly used in the electrolyte solution for the secondary battery, and for example, the anion of the lithium salt may include any one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The organic solvent included in the electrolyte solution is not limited to a particular type and may include any organic solvent commonly used in the art. Typically, the organic solvent may include at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite and tetrahydrofuran.

In particular, among these carbonate-based organic solvents, preferably, cyclic carbonate such as ethylene carbonate and propylene carbonate is a high-viscosity organic solvent that has high dielectric constant and easily dissociates the lithium salt in the electrolyte, and more preferably, when the cyclic carbonate is used in combination with low-viscosity, low-dielectric constant linear carbonate such as dimethyl carbonate and diethyl carbonate at an optimal ratio, the electrolyte solution having high electrical conductivity may be prepared.

Optionally, the electrolyte solution that is stored according to the present disclosure may further include an additive such as an overcharging preventive agent commonly used in the electrolyte solution.

The lithium secondary battery according to an embodiment of the present disclosure may be manufactured by placing the positive electrode and the negative electrode with the separator interposed between them to form the electrode assembly, placing the electrode assembly in, for example, the pouch, the cylindrical battery case or the prismatic battery case, and injecting the electrolyte. Alternatively, the lithium secondary battery may be manufactured by stacking the electrode assembly, filling it with the electrolyte solution, and placing the result in the battery case and sealing.

In this instance, the detailed structure of the secondary battery and the energy storage device is well-known in the art, and its description is omitted.

Hereinafter, examples will be described in detail to particularly describe the present disclosure. However, the examples according to the present disclosure may be modified in many other forms, and the scope of the present disclosure should not be interpreted as being limited to the following examples. The examples of the present disclosure are provided to explain the present disclosure to those skilled in the art thoroughly and completely.

### EXAMPLE

### Example 1

### (1) Preparation of granules

Si (Pure Si, FH6, average particle size D50: 10 µm) as a silicon-based active material, single-walled carbon nanotubes (SWCNT) as a linear conductive material, a graphite-based platy conductive material (SFG-6L), styrene-butadiene rubber (SBR A, styrene : butadiene molar ratio = 64:36) as a binder for granules, and carboxymethyl cellulose (CMC, Daicell2200) as a dispersant were mixed with water as a dispersion medium at a weight ratio of 75:2:8:8:7 through a homogenizer to prepare a composition having viscosity of about 9000 cPs. In this instance, the solid content in the composition was 15 wt%.

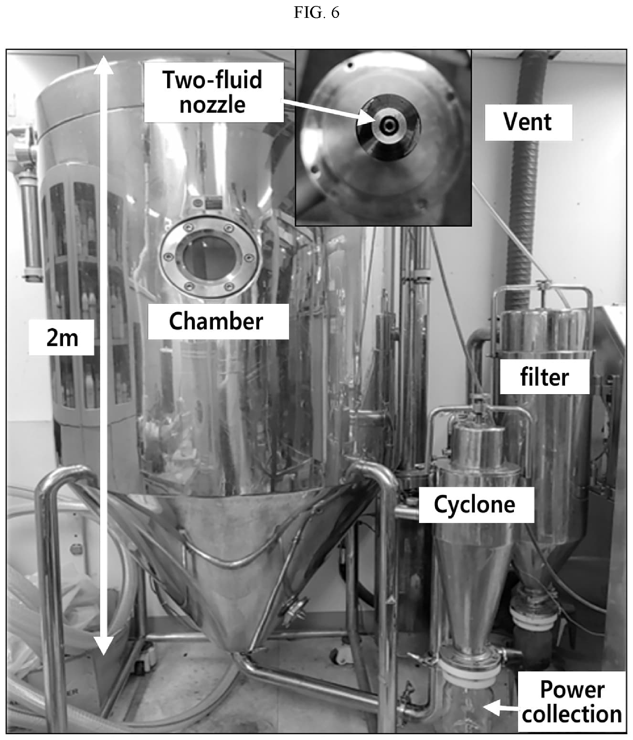

The as-prepared composition was fed into a spray dryer together with hot air in the pressure range condition of -40 mmH₂O to dry it. In this instance, the conditions of the spray dryer were controlled to the inlet temperature of 250°C, the outlet temperature of 105°C, the pressure of the two-fluid nozzles of the spray dryer of 2.5 bar, and the feed rate of the spray dryer of 10 cc/min. FIG. 6 is an image of the spray dryer used.

Large particles of 150 µm or more were removed from half of the dried product using an industrial sieve.

The granules had a central portion including the plurality of silicon-based active materials and the linear conductive material, and a surface portion located at the outside of the central portion and including the binder for granules binding the plurality of silicon-based active materials and the linear conductive material.

### (2) Manufacture of electrode (negative electrode)

The obtained granules, a graphite-based active material (a mixture of artificial graphite and natural graphite at a weight ratio of 1:1) as a carbon-based active material, carbon black (C65) as a conductive material for a negative electrode layer, and styrene butadiene rubber (SBR, styrene : butadiene molar ratio = 64:36) as a binder for a negative electrode layer were mixed with water as a dispersion medium at a weight ratio of 5:92:1:2 through a homogenizer at 3000 rpm to prepare a slurry having viscosity of about 9000 cPs. In this instance, the solid content in the slurry was 40 wt%.

The as-prepared slurry was applied to two surfaces of a copper current collector (thickness: 10 um) by a slot die method, dried at 80°C for 0.5 hours using a convection oven and pressed/rolled by a roll pressing method to manufacture a negative electrode having a negative electrode active material layer having a loading amount of 300 mg/25 cm² in weight per unit area on the two surfaces of the current collector.

### (3) Manufacture of positive electrode

Li[Ni_{0.88}Co_{0.07}Mn_{0.04}]Al_{0.01}O₂ as a positive electrode active material, a pre-dispersion of carbon black as a positive electrode conductive material and polyvinylidene fluoride (PVdF) as a binder for positive electrode granules were added to NMP as a dispersion medium at a weight ratio of 96.5:1.5:2, and the mixture was stirred using a homogenizer at 3500 rpm for 1 hour to prepare a positive electrode active material slurry. The solid content in the carbon black pre-dispersion was 16%, and the final solid content in the slurry was 68%. The slurry was coated on two surfaces of a 12 µm-thick aluminum current collector, and the coated slurry was dried using a dryer equipped with a hot air blower and an IR heater to form a positive electrode active material layer.

Subsequently, the positive electrode active material layer was pressed/rolled by a roll pressing method to manufacture a positive electrode having a positive electrode active material layer having a loading amount of 590 mg/25 cm²in weightper unit area after drying.

### (4) Manufacture of secondary battery

### 1) Monocell secondary battery

The as-prepared positive and negative electrodes were placed with a porous polyethylene membrane (thickness: 10 µm) as a separator between them to make an electrode assembly. The electrode assembly was placed in a battery case, followed by injection of a liquid electrolyte in which 1 M LiPF6 was dissolved in a solvent containing a mixture of ethylene carbonate, dimethyl carbonate and diethyl carbonate at 1:2:1 (volume ratio), sealing and formation/activation to manufacture a monocell secondary battery cell.

### 2) Half coin cell secondary battery

Lithium metal and the as-prepared negative electrode were placed in a coin-shaped battery case, followed by injection of a liquid electrolyte in which 1M LiPF6 was dissolved in a solvent containing a mixture of ethylene carbonate, dimethyl carbonate and diethyl carbonate at 1:2:1 (volume ratio), sealing and formation/activation to manufacture a half coin cell secondary battery.

### Example 2

Granules was prepared by the same method as Example 1, except that Si (Pure Si, FH6, average particle size D50: 10 µm) as a silicon-based active material, single-walled carbon nanotubes (SWCNT) as a linear conductive material, a graphite-based platy conductive material (SFG-6L), styrene-butadiene rubber (SBR A, styrene:butadiene molar ratio=64:36) as a binder for granules, an acrylate polymer such as a polyacrylic acid copolymer (an acrylamide/acrylonitrile/acrylic acid copolymer), and carboxymethyl cellulose (CMC, Daicell2200) as a dispersant were mixed with water as a dispersion medium at a weight ratio of 75:2:4:4:8:7 through a homogenizer to prepare a composition having viscosity of about 9000 cPs.

A negative electrode and a secondary battery were manufactured using the obtained granules by the same method as Example 1.

### Example 3

Granules were prepared by the same method as Example 1, except that Si (Pure Si, FH6, average particle size D50: 10 µm) as a silicon-based active material, single-walled carbon nanotubes (SWCNT) as a linear conductive material, a graphite-based platy conductive material (SFG-6L), styrene-butadiene rubber (SBR B, styrene:butadiene molar ratio = 42:58) as a binder for granules and carboxymethyl cellulose (CMC, Daicell2200) as a dispersant were mixed with water as a dispersion medium at a weight ratio of 75:2:8:8:7 through a homogenizer to prepare a composition having viscosity of about 9000 cPs.

A negative electrode and a secondary battery were manufactured using the obtained granules by the same method as Example 1.

### Comparative Example 1-1

Granules were prepared by the same method as Example 1, except that the as-prepared composition was fed into a spray dryer together with hot air in the pressure range condition of -40 mmH₂O to dry it, and in this instance, the conditions of the spray dryer were controlled to the inlet temperature of 250°C, the outlet temperature of 105°C, the pressure of the two-fluid nozzles of the spray dryer of 0.2 bar, and the feed rate of the spray dryer of 50 cc/min.

A negative electrode and a secondary battery were manufactured by the same method as Example 1, except that the obtained granules was mixed at 1000 rpm through a homogenizer to prepare a slurry.

### Comparative Example 1-2

Granules were prepared by the same method as Example 1, except that the as-prepared composition was fed into a spray dryer together with hot air in the pressure range condition of -40 mmH₂O to dry it, and in this instance, the conditions of the spray dryer were controlled to the inlet temperature of 250°C, the outlet temperature of 105°C, the pressure of the two-fluid nozzles of the spray dryer of 0.2 bar, and the feed rate of the spray dryer of 50 cc/min.

A negative electrode and a secondary battery were manufactured using the obtained granules by the same method as Example 1.

### Comparative Example 2-1

Granules were prepared by the same method as Comparative Example 1-1, except that SBR A as a binder for granules and a polyacrylic acid copolymer (an acrylamide/acrylonitrile/acrylic acid copolymer) were used.

A negative electrode and a secondary battery were manufactured by the same method as Example 1, except that the obtained granules was mixed at 1000 rpm through a homogenizer to prepare a slurry.

### Comparative Example 2-2

Granules were prepared by the same method as Comparative Example 2-1, except that the as-prepared composition was fed into a spray dryer together with hot air in the pressure range condition of -40 mmH₂O to dry it, and in this instance, the conditions of the spray dryer were controlled to the inlet temperature of 250°C, the outlet temperature of 105°C, the pressure of the two-fluid nozzles of the spray dryer of 0.2 bar, and the feed rate of the spray dryer of 50 cc/min.

A negative electrode and a secondary battery were manufactured using the obtained granules by the same method as Example 1.

### Comparative Example 3-1

Granules were prepared by the same method as Example 1, except that the as-prepared composition was fed into a spray dryer together with hot air in the pressure range condition of -40 mmH₂O to dry it, and in this instance, the conditions of the spray dryer were controlled to the inlet temperature of 250°C, the outlet temperature of 105°C, the pressure of the two-fluid nozzles of the spray dryer of 0.2 bar, and the feed rate of the spray dryer of 50 cc/min.

A negative electrode and a secondary battery were manufactured by the same method as Example 3, except that the obtained granules was mixed at 1000 rpm through a homogenizer to prepare a slurry.

### Comparative Example 3-2

Granules were prepared by the same method as Comparative Example 3-1, except that the as-prepared composition was fed into a spray dryer together with hot air in the pressure range condition of -40 mmH₂O to dry it, and in this instance, the conditions of the spray dryer were controlled to the inlet temperature of 250°C, the outlet temperature of 105°C, the pressure of the two-fluid nozzles of the spray dryer of 0.2 bar, and the feed rate of the spray dryer of 50 cc/min.

A negative electrode and a secondary battery were manufactured using the obtained granules by the same method as Example 1.

### Comparative Example 4

### (1) Manufacture of negative electrode

Si (Pure Si, FH6, average particle size D50: 10 µm) as a silicon-based active material, single-walled carbon nanotubes (SWCNT, SFG-6L) as a linear conductive material, carbon black (SuperC65) as a conductive material for a negative electrode layer, styrene-butadiene rubber (SBR A, styrene:butadiene molar ratio = 64:36) as a binder, and carboxymethyl cellulose (CMC, Daicell2200) as a dispersant were mixed with water as a dispersion medium at a weight ratio of 76.1:1.6:8.1:8.1:6.1 through a homogenizer at 3000 rpm to prepare a slurry having viscosity of about 9000 cPs. In this instance, the solid content in the composition was 40 wt%.

The as-prepared slurry was applied to two surfaces of a copper current collector (thickness: 10 um) by a slot die method, dried using a convection oven at 80°C for 0.5 hours, and pressed/rolled by a roll pressing method to manufacture a negative electrode having a negative electrode active material layer having a loading amount of 300 mg/25 cm² in weight per unit area on the two surfaces of the current collector.

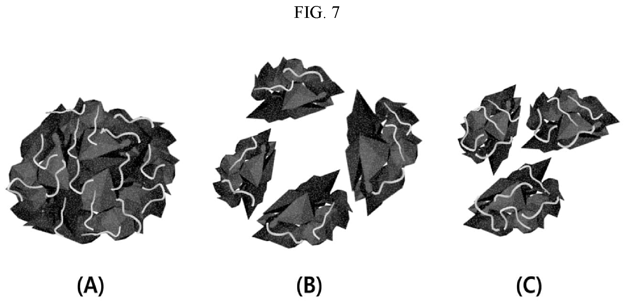

FIG. 7 is a diagram showing granule C according to an embodiment of the present disclosure (corresponding to the granules of Examples 1 to 3), spherical granule A (corresponding to the granules of Comparative Examples 1-1, 2-1, 3-1), and crushed granule B (corresponding to Comparative Examples 1-2, 2-2, 3-2). Referring to FIG. 7, the spherical granule A has a large particle size, is close to a spherical shape with high circularity and has high solidity due to the non-concave surface. The crushed granule B as a result of crushing by physical impact from collisions due to higher shear forces when manufacturing electrodes using the spherical granule has a smaller particle size than the spherical granule and low circularity by the exposure of sharp crushed surfaces. In contrast, it was confirmed that the granule C according to an embodiment of the present disclosure has a smaller particle size than the spherical granule A and low circularity, and compared to the crushed granule having an uneven binder distribution (binder distribution is indicated by the lines in FIG. 7) due to the exposure of crushed surfaces, the granules C have an even binder distribution over the entire granule surface because crushing does not occur in the manufacturing process.

### Evaluation method

### Observation of granules

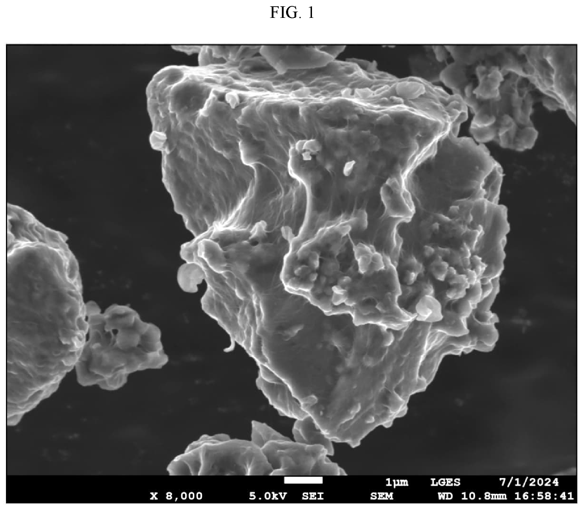

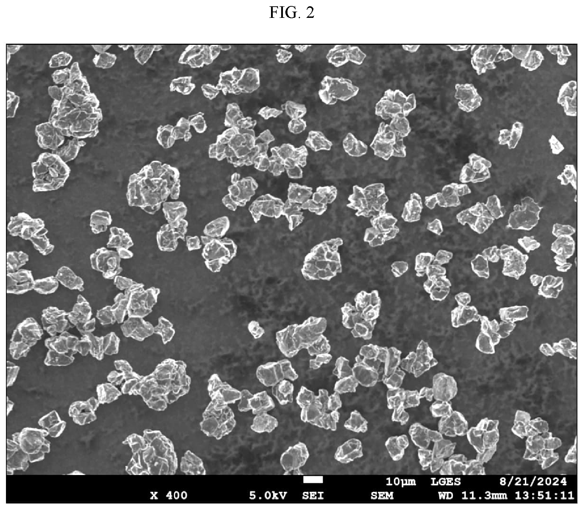

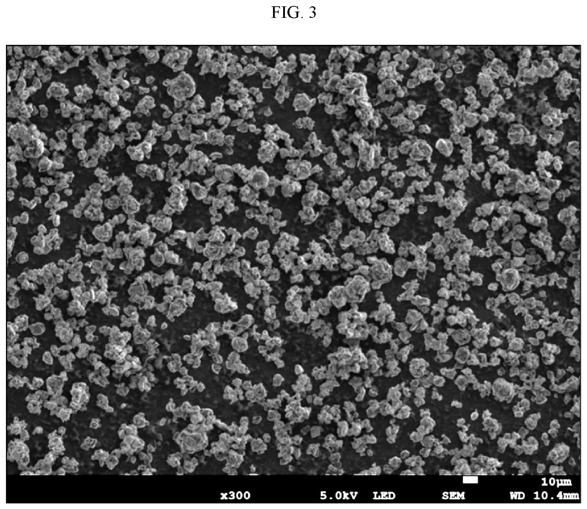

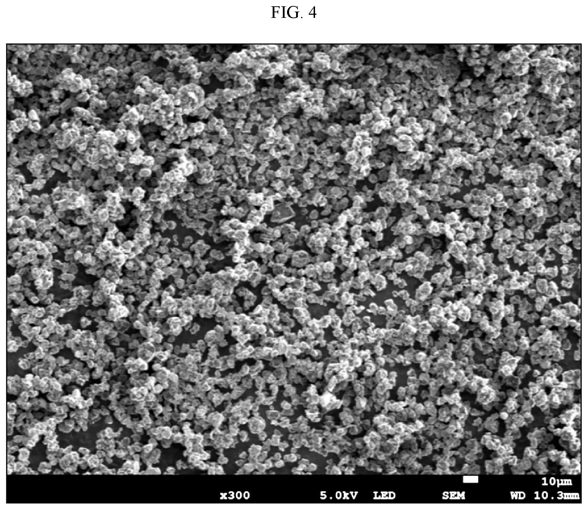

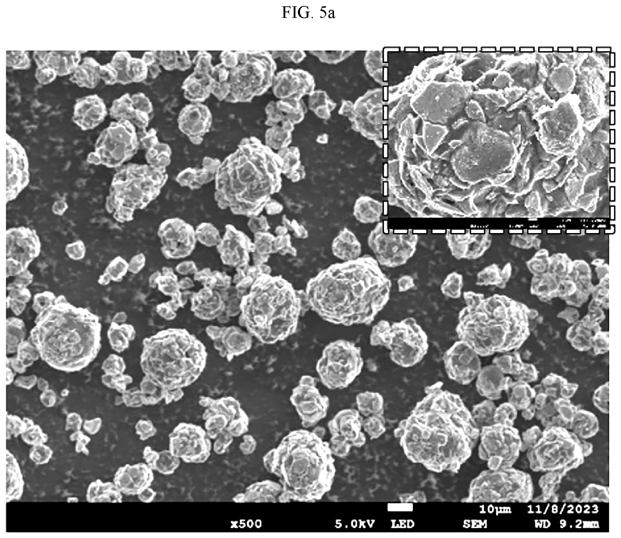

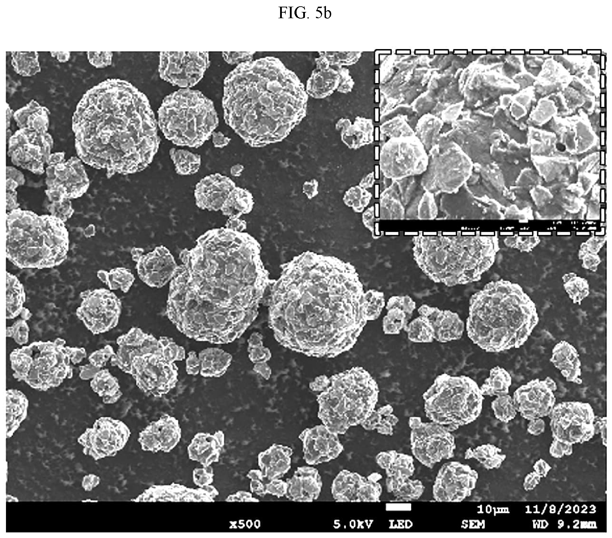

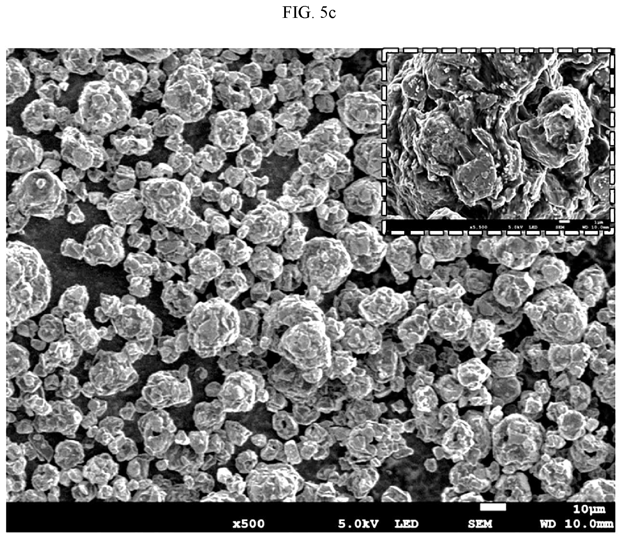

The granules prepared in each of Examples 1 and 2 and Comparative Examples 1-1, 2-1 and 3-1 was imaged using FE-SEM (Hitachi S-4800 Scanning Electron Microscope) at the magnification of 300 times to 8,000 times, and in this instance, imaging was done at the acceleration voltage of 5 kV to observe the detailed surface structure. FIGS. 1 to 5 show the results. Specifically, FIGS. 1 to 3 are SEM images of the granules prepared in Example 1 when observed at varying magnifications, FIG. 4 is an SEM image of the granules prepared in Example 2, and FIGS. 5a, 5b and 5c are SEM images of the granules prepared in Comparative Example 1-1, Comparative Example 2-1 and Comparative Example 3-1, respectively.

### Circularity of granules

To determine the circularity of the granules prepared in Example 2 and Comparative Example 1-1, an optical image of 10,000 particles of each granule was obtained using a particle size analyzer (Malvern Morphology 4), and circularity in the obtained image of the granules was calculated by numerical averaging using Equation 1 below. TABLE 1 below summarizes the results. 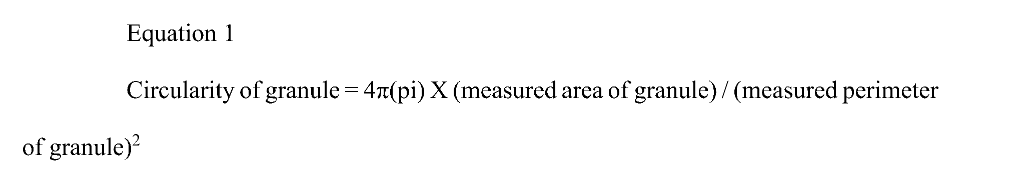 Equation 1 Circularity of granule = 4π(pi) X (measured area of granule) / (measured perimeter of granule)2

### Solidity of granules

To determine the solidity of the granules prepared in Example 2 and Comparative Example 1-1, an optical image of 10,000 granules was obtained using a particle size analyzer (Malvern Morphology 4), the actual area (a) of each granule and the convex hull area (b) of the granule in the obtained image were calculated, and its ratio (a/b) was calculated using Equation 2 below. TABLE 1 summarizes the results.$Solidity = \left(actual area of granule\right) / convex hull area of granule$ Equation 2

Here, the convex hull area of the granule is the total area enclosed by the convex hull of the granule, and refers to the area of the simplest convex polygon created by connecting the outermost points of the granule.

### Average particle size of granules

The particle size distribution of the granules prepared in Example 2 and Comparative Example 1-1 was calculated using a particle size analyzer (Malvern Morphology 4). The D50 particle size was measured by calculating a particle diameter at 50% of cumulative particle size distribution in the measurement instrument. Likewise, D10 and D90 particle sizes were calculated as particle diameters at 10% and 90% of cumulative particle size distribution in the measurement instrument. TABLE 1 below summarizes the measurement results of D50, D10, and D90 particle sizes.

### Angle of repose of granules

The angle of repose of the granules included in the negative electrodes of Example 2 and Comparative Example 1-1 was measured by the ASTM D 6393-99 method. TABLE 1 below summarizes the results.

**TABLE 1**

| | Circularity on the basis of D50 | Solidity | Circularity X Solidity | Average particle size (D50) | Average particle size (D10) | Average particle size (D90) | Angle of repose (°) |
|---|---|---|---|---|---|---|---|
| Example 2 | 0.897 | 0.959 | 0.860 | 14.25 | 7.564 | 27.83 | 50.1 |
| Comparative Example 1-1 | 0.938 | 0.985 | 0.924 | 27.13 | 11.53 | 58.19 | 32.5 |

### Degree of dispersion of granules within negative electrode active material layer and its standard deviation

The method for measuring the degree of dispersion of the granules within the negative electrode active material layer of the negative electrode of each of Example 2 and Comparative Examples 1-1, 2-2 and 4 and its standard deviation was performed as follows.

The cross section of the negative electrode active material layer of the negative electrode to be measured was measured using a scanning electron microscope (SEM) (Manufacturer: JEOL, Name: JSM-7200) to obtain an image, and the image (SEM image) measured by SEM was analyzed pixel by pixel using the ImageJ program to measure the degree of dispersion of the granules including the silicon-based active material within the negative electrode active material layer. In this instance, the degree of dispersion was calculated for each of four SEM images, and its standard deviation was calculated from the degree of dispersion of each image. The smaller degree of dispersion was evaluated as a more even distribution of the granules within the negative electrode active material layer without agglomeration at some areas, and the lower standard deviation of dispersion was evaluated as an even dispersion with a lower deviation within the same negative electrode active material layer.

Specifically, when measuring the degree of dispersion, SEM image pixels of the analysis area in the negative electrode active material layer were divided into segments of 20 X 20 (width X height), and an area ratio of a region of interest (where the granules including the silicon-based active material are present) in each segment was calculated, and sample distribution of 400 area ratios was defined as the degree of dispersion.

In this instance, sample variance was calculated from each value of 400 area ratios using the following equation and provided as the degree of dispersion.${s}^{2} = Σ {\left(y-y′\right)}^{2} / \left(n-1\right)$

In the above equation, s² denotes the sample variance, i.e., the degree of dispersion, and represents the variance calculated from the sample, and to distinguish it from population variance σ², it is indicated as s².

Σ(y - y')² is the sum of squared deviations,
where y: each observation
y': sample mean (y-bar)
(y - y'): difference (deviation) between each observation and sample mean
(y - y')²: squared deviation
Σ: add squared deviation to all observations
n - 1 denotes the degree of freedom,
where n: sample size (number of observations)

The standard deviation of dispersion was calculated from the degrees of dispersion of the four SEM images by a commonly used method. That is, the arithmetic mean of the degrees of dispersion of the four SEM images was calculated, the average of the squared results of the products obtained by subtracting the mean from each degree of dispersion was calculated, and its square root was obtained as the standard deviation of dispersion.

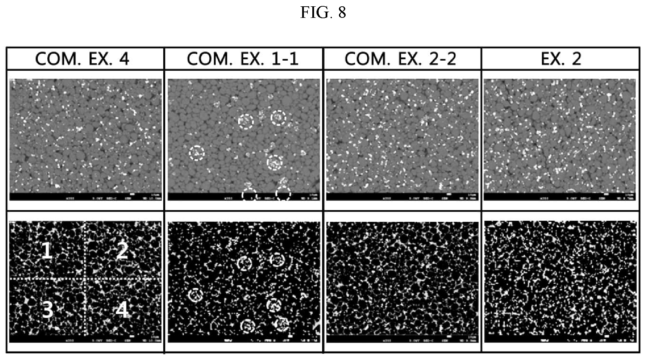

The results are shown in TABLE 2 and FIG. 8. For reference, in FIG. 8, the circles in Comparative Example 1-1 indicate some of locations where the granules are present, and the numbers 1 to 4 in Comparative Example 4 indicate four analysis areas in the SEM image.

**TABLE 2**

| | Degree of dispersion | Standard deviation of dispersion |
|---|---|---|
| Comparative Example 1-1 | 2.64x10 ⁻² | 8.30 X 10 ⁻³ |
| Comparative Example 2-2 | 3.73x10 ⁻² | 5.14 X 10 ⁻³ |
| Example 2 | 4.4x10 ⁻² | 2.85 X 10 ⁻³ |

### Volume expansion ratio of negative electrode active material layer

To measure the volume expansion ratio of the negative electrode active material layer of the negative electrode of each of Examples 1 to 3 and Comparative Example 4, the thickness of the negative electrode active material layer was measured using an X-ray microscope (XRM) (ZEISS Xradia Versa 620) and the volume expansion ratio of the negative electrode active material layer was calculated by the following equation. TABLE 3 below summarizes the results.

Volume expansion ratio (%) = (electrode thickness in 100 charge cycles - initial electrode thickness) / initial electrode thickness X 100

**TABLE 3**

| | Comparative Example 4 | Example 1 | Example 2 | Example 3 |
|---|---|---|---|---|
| Initial electrode thickness | 114 | 118 | 118 | 118 |
| Electrode thickness in 100 charge cycles | 160 | 137.5 | 134.5 | 154 |
| Volume expansion ratio (%) | 40.4 | 16.6 | 14.1 | 30.6 |

### Adhesion strength evaluation of negative electrode

A double-sided tape was attached to a slide glass, and the negative electrode of each of Examples 2 to 3 and Comparative Examples 1-1 and 2-2 cut into a size of 20 mm X 100 mm was placed on top and adhered by moving a 2 kg roller back and forth 10 times, and pulled using a UTM (TA) machine at 10 mm/min to measure a force (adhesion strength) required to peel off from the slide glass. In this instance, the measurement angle of the slide glass and the electrode was 90°. TABLE 4 below summarizes the measured adhesion strength.

**TABLE 4**

| | Adhesion strength (gf/cm) |
|---|---|
| Example 2 | 54.42 |
| Example 3 | 61.26 |
| Comparative Example 1-1 | 29.6 |
| Comparative Example 2-2 | 45.19 |

Battery performance evaluation The half coin cell secondary batteries manufactured in Examples 2 to 3 and Comparative Examples 1-1, 1-2, 2-2 and 3-2 and the monocell secondary battery were evaluated. After sufficient formation, discharge capacity and capacity retention of the secondary batteries were evaluated using a battery charge/discharge tester (a battery cycler). In this instance, the measurement was done in a 25°C constant temperature chamber to minimize the influence of temperature.

The half coin cell secondary battery was discharged at 0.1 C in constant current (CC) discharge mode, and when the lower voltage limit (0.05 V) was reached, the CC mode was changed to constant voltage (CV) mode and the discharge was maintained until the current reached below 0.05 C. Subsequently, the battery was charged at 0.1 C in CC mode up to the upper voltage limit (1.5 V), and the measurement was made repeatedly until the third cycle.

The first discharge efficiency of the battery was calculated as a ratio of discharge capacity in the first cycle to charge capacity in the first cycle, and discharge efficiency of the battery in the third cycle was calculated as a ratio of discharge capacity in the third cycle to charge capacity in the third cycle. TABLE 5 below summarizes the results.

Referring to TABLE 5 below, it was confirmed that the half coin cell secondary batteries of Examples 2 and 3 had much higher charge capacity and discharge capacity in the first and third cycles than Comparative Examples 1-1, 1-2, 2-2 and 3-2, and showed high discharge efficiency in each cycle. It may be thought that the granules used in the half coin cell secondary batteries of Examples 2 and 3 have lower circularity and solidity than the granules used in the Comparative Examples, and its consequential larger specific surface area of the granules and larger number of reaction sites, lead to an even distribution within the electrode, resulting in improved performance characteristics.

**TABLE 5**

| 0.1C cycle | First cycle | | | Third cycle | | |
|---|---|---|---|---|---|---|
| | First charge capacity (mAh/g) | First discharge capacity (mAh/g) | First discharge efficiency (%) | Third charge capacity (mAh/g) | Third discharge capacity (mAh/g) | Third discharge efficiency (%) |
| Comparative Example 1-1 | 569.1 | 525.4 | 92.3 | 516.5 | 507.5 | 98.3 |
| Comparative Example 1-2 | 571.4 | 528.3 | 92.5 | 525.6 | 519.3 | 98.8 |
| Comparative Example 2-2 | 549.3 | 511.3 | 93.1 | 502.3 | 496.9 | 98.9 |
| Example 2 | 581.1 | 538.2 | 92.6 | 528.6 | 522.0 | 98.7 |
| Comparative Example 3-2 | 565.4 | 527.8 | 93.4 | 519.3 | 513.8 | 99.0 |
| Example 3 | 584.5 | 543.8 | 93.0 | 526.5 | 519.3 | 98.6 |

The evaluation of the monocell secondary battery was done to determine the average capacity of the monocell secondary batteries manufactured in Examples 1 to 3, its standard deviation, actual capacity to design capacity and its standard deviation. The battery was charged at 0.33C in CC mode, and when the upper voltage limit (4.2V) was reached, the CC mode was changed to CV mode, and the charge was maintained until the current reached below 0.05C. Subsequently, on the condition that the battery was discharged at 0.33C in CC mode until the lowest voltage (2.5V), measurement was performed, and TABLE 6 below summarizes the results. In this instance, the measured capacity was measured in the three cells, and its average and standard deviation were calculated. The actual capacity to design capacity (%) refers to a percentage of measured capacity to design capacity at 1C.

Discharge resistance (SOC50(30s)(Ω) and SOC50(0.1s)(Ω)) is an index calculated using a voltage drop for a specific time in the monocell secondary batteries manufactured in Examples 1 to 3, and was calculated based on the voltage drop measured by discharging with a constant current at 50% State of Charge (SOC) for each of 30 seconds and 0.1 seconds. Specifically, after the monocell was charged to 50% SOC, a set discharge current of 2.5 C-rate was applied, and a terminal voltage 0.1 seconds and 30 seconds after the start of discharge was measured. In this instance, a difference between no-load voltage before the start and the voltage at each point in time was divided by the current, and each discharge resistance was calculated according to the following equation:
$SOC 50 \left(0.1s\right) \left(Ω\right) = \left({V}_{0}-{V}_{0.1 s}\right) / I$
$SOC 50 \left(30s\right) \left(Ω\right) = \left({V}_{0}-{V}_{30 s}\right) / I$

Here, V₀ denotes the no-load voltage (V) immediately before the start of discharge, V_{0.1s} denotes the voltage (V) 0.1 seconds after the start of discharge, V₃₀ₛ denotes the voltage (V) 30 seconds after the start of discharge, and I denotes the discharge current (A).

**TABLE 6**

| | | Example 1 | Example 2 | Example 3 |
|---|---|---|---|---|
| Measured capacity | Average (mAh) | 77.53 | 77.23 | 77.63 |
| | Standard deviation | 0.31 | 0.22 | 0.33 |
| Actual capacity to design capacity (%) | | 94.25 | 93.89 | 94.38 |
| Discharge resistance | SOC50(30s)(Ω) | 1.46 | 1.44 | 1.39 |
| | SOC50(0.1s) (Ω) | 0.59 | 0.57 | 0.55 |

## Claims

1. Granules comprising a silicon-based active material, a linear conductive material and a binder for the granules,
wherein the binder for the granules connect and hold the silicon-based active material and the linear conductive material together, and
wherein multiplication of circularity and solidity of the granule is 0.7 to 0.9, and the circularity and the solidity are defined by Equation 1 and Equation 2 below, respectively, $Circularity = 4 π \left(pi\right) * \left(actual area of granule\right) / {\left(perimeter of granule\right)}^{2}$ Equation 1 $Solidity = \left(actual area of granule\right) / convex hull area of granule$ Equation 2
wherein the convex hull area of the granule is a total area enclosed by a convex hull of the granule, and refers to an area of a simplest convex polygon created by connecting outermost points of the granule.

2. The granules according to claim 1,
wherein the multiplication of the circularity and the solidity of the granule is 0.7 to 0.88.

3. The granules according to claim 1,
wherein an average particle size (D50) of the granules is 10 µm to 25 µm.

4. The granules according to claim 1,
wherein an angle of repose of the granules is 35° to 80°.

5. The granules according to claim 1,
wherein the silicon-based active material includes silicon (Si), silicon oxide (SiOx (0<x≤2), a Si/C composite, or two or more thereof.

6. The granules according to claim 1,
wherein the linear conductive material includes single-walled carbon nanotubes (SWCNT), multi-walled carbon nanotubes (MWCNT), carbon nanofibers, or two or more thereof.

7. The granules according to claim 1,
wherein the binder includes at least one of a linear binder or a dot-type binder.

8. The granules according to claim 7,
wherein the binder includes the linear binder and the dot-type binder.

9. The granules according to claim 7,
wherein the linear binder includes an acrylate-based polymer, and the dot-type binder includes a diene-based polymer, a styrene-based polymer, or two or more thereof.

10. The granules according to claim 1,
wherein the granules include a central portion including the silicon-based active material and the linear conductive material; and a surface portion present on all or part of an outer side of the central portion, the surface portion including the binder for the granules holding the silicon-based active material and the linear conductive material together.

11. The granules according to claim 10,
wherein an amount (wt%) of the binder for the granules to a total weight 100 wt% of the silicon-based active material, the linear conductive material and the binder for the granules is larger at the surface portion of the granules than the central portion, and
wherein the surface portion is an area near a granule surface to a predetermined depth in a direction from the granule surface to a granule center, and the central portion is an area other than the surface portion.

12. The granules according to claim 1,
wherein the granules include 80 to 98 parts by weight of the silicon-based active material, 0.2 to 10 parts by weight of the linear conductive material, and 0.5 to 10 parts by weight of the binder for the granules based on 100 parts by weight of the granules.

13. The granules according to claim 1,
wherein the granules further include a carbon-based active material.

14. The granules according to claim 1,
wherein the granules further include a dispersant.

15. The granules according to claim 14,
wherein the dispersant includes carboxymethyl cellulose (CMC).

16. A method for manufacturing the granules defined in any one of claims 1 to 15, the method comprising:
drying a composition including the silicon-based active material, the linear conductive material, the binder for the granules and an aqueous dispersion medium by spray drying.

17. A negative electrode for an electrochemical device, comprising:
a current collector; and
a negative electrode active material layer present on the current collector,
wherein the negative electrode active material layer includes granules including a silicon-based active material, a linear conductive material and a binder for the granules,
wherein the granules include the silicon-based active material, the linear conductive material and the binder for the granules,
wherein the binder for the granules connect and hold the silicon-based active material and the linear conductive material together, and
wherein multiplication of circularity and solidity of the granule is 0.7 to 0.9, and the circularity and the solidity are defined by Equation 1 and Equation 2 below, respectively, $Circularity = 4 π \left(pi\right) * \left(actual area of granule\right) / {\left(perimeter of granule\right)}^{2}$ Equation 1 $Solidity = \left(actual area of granule\right) / convex hull area of granule$ Equation 2
wherein the convex hull area of the granule is a total area enclosed by a convex hull of the granule, and refers to an area of a simplest convex polygon created by connecting outermost points of the granule.

18. The negative electrode for the electrochemical device according to claim 17,
wherein a degree of dispersion of the granules within the negative electrode active material layer is 1 x 10⁻² to 10 x 10⁻², and a standard deviation of dispersion of the granules is 1 x 10⁻³ to 4 x 10⁻³.

19. The negative electrode for the electrochemical device according to claim 17,
wherein a volume expansion ratio of the negative electrode active material layer is 3% to 35%.

20. The negative electrode for the electrochemical device according to claim 17,
wherein the negative electrode active material layer includes the granules, a carbon-based active material and a binder for the negative electrode layer.

21. The negative electrode for the electrochemical device according to claim 20,
wherein the negative electrode active material layer includes 1 to 10 parts by weight of the granules, 70 to 99 parts by weight of the carbon-based active material and 0.1 to 10 parts by weight of the binder for the negative electrode layer based on 100 parts by weight of the negative electrode active material layer.

22. The negative electrode for the electrochemical device according to claim 17,
wherein the negative electrode active material layer includes the granules, a carbon-based active material, a binder for the negative electrode layer and a conductive material for the negative electrode layer.

23. The negative electrode for the electrochemical device according to claim 22,
wherein the negative electrode active material layer includes 1 to 10 parts by weight of the granules, 70 to 99 parts by weight of the carbon-based active material, 0.01 to 5 parts by weight of the conductive material for the negative electrode layer, and 0.1 to 10 parts by weight of the binder for the negative electrode layer based on 100 parts by weight of the negative electrode active material layer.

24. A method for manufacturing the negative electrode for the electrochemical device defined in claim 17, the method comprising:
forming the negative electrode active material layer using the granules including the silicon-based active material, the linear conductive material and the binder for the granules.

25. The method for manufacturing the negative electrode for the electrochemical device according to claim 24,
wherein the method for manufacturing the negative electrode includes a wet process, a dry process, or both.

26. The method for manufacturing the negative electrode for the electrochemical device according to claim 24,
wherein the wet process includes mixing the granules and a binder for the negative electrode layer together, or mixing the granules, the binder for the negative electrode layer and a conductive material for the negative electrode layer together in a dispersion medium to prepare a negative electrode slurry; and applying the negative electrode slurry to at least one surface of a current collector and drying to form the negative electrode active material layer.

27. The method for manufacturing the negative electrode for the electrochemical device according to claim 24,
wherein the dry process includes dry mixing the granules and a fibrillatable binder, or dry mixing the granules, the fibrillatable binder and a conductive material for the negative electrode layer to prepare a mixture;
kneading the prepared mixture to produce a mixture mass, and grinding the mixture mass to obtain electrode mixture granules;
feeding the electrode mixture granules between a plurality of rolls to perform calendaring to form an electrode film; and
laminating the electrode film on a metal current collector.

28. The method for manufacturing the negative electrode for the electrochemical device according to claim 25,
wherein the dry process includes directly applying, to a current collector, the granules alone, the granules and a binder for the negative electrode layer together, or the granules, the binder for the negative electrode layer and a conductive material for the negative electrode layer together and pressing/rolling.

29. The method for manufacturing the negative electrode for the electrochemical device according to claim 24,
wherein the negative electrode active material layer further includes a carbon-based active material.

30. An electrochemical device comprising the negative electrode defined in claim 17.

31. The electrochemical device according to claim 30,
wherein the electrochemical device is a secondary battery.
